# EUROPEAN PATENT APPLICATION

(11) **EP 4 746 376 A1**
(43) Date of publication of application: **20.05.2026**
(21) Application number: 23948768.9
(22) Date of filing: 11.08.2023
(51) Int. Cl.: H04L 65/40, G06F 21/62, H04L 9/00

(54) **COMMUNICATION METHOD AND COMMUNICATION APPARATUS**

(71) Applicant: Huawei Technologies Co., Ltd., Shenzhen, Guangdong 518129 (CN)
(72) Inventor: WANG, Donghui, Shenzhen, Guangdong 518129 (CN); LIU, Fei, Shenzhen, Guangdong 518129 (CN); XIAO, Xun, Shenzhen, Guangdong 518129 (CN)
(74) Representative: Gill Jennings & Every LLP
(86) International application number: PCT/CN2023/112769
(87) International publication number: WO 2025/035333

(57) **Abstract**

Embodiments of this application provide a communication method and a communication apparatus, to provide an implementation solution of a decentralized communication network. In the implementation solution, a new node to be added to a blockchain can be managed and controlled in the decentralized communication network. The method includes: A first network element sends request information to a second network element deployed in an operator network, where the request information is used to request to perform a first operation on a first smart contract SC that the first network element expects to manage. The second network element sends indication information to a first node in a first blockchain BC based on the request information, where the indication information indicates to perform the first operation on the first SC, and the first BC is a BC on which the first SC is to be deployed or has been deployed. The first node in the first BC performs the first operation on the first SC in response to the indication information.

## Description

### TECHNICAL FIELD

This application relates to the communication field, and in particular, to a communication method and a communication apparatus.

### BACKGROUND

Blockchain (blockchain, BC) is a distributed ledger technology (distributed ledger technology, DLT) that integrates a plurality of technologies such as cryptography, a peer-to-peer (peer-to-peer, P2P) network, and a distributed database, and features immutability, a consensus mechanism, decentralization, and the like. A smart contract (smart contract, SC) technology may use the foregoing features of the BC, so that code constructed based on the SC becomes a decentralized application (decentralized application, DAPP). In other words, an agreed rule or function is deployed at an account address on the BC in a manner of a segment of executable code. When an invocation request is initiated to the address, the invocation request is verified and code corresponding to the invocation request is executed in the BC under a constraint of a consensus mechanism, ensuring certainty and uniqueness of an execution result.

Currently, in a next generation 3rd generation partnership project (3rd generation partnership project, 3GPP) network (for example, a 6th generation (6th generation, 6G) communication network) in the future, an important evolution direction is to combine the BC with a 3GPP network, to construct a decentralized 3GPP network. However, how to specifically implement the decentralized 3GPP network is an urgent problem to be resolved currently.

### SUMMARY

Embodiments of this application provide a communication method and a communication apparatus, to provide an implementation solution of a decentralized communication network, where in the implementation solution, a smart contract (smart contract, SC) can be managed and controlled in the decentralized communication network.

To achieve the foregoing objective, the following technical solutions are used in this application.

According to a first aspect, a communication method is provided. The communication method includes: A first network element sends request information to a second network element, where the request information is used to request to perform a first operation on a first SC that the first network element expects to manage. The second network element sends indication information to a first node in a blockchain BC based on the request information, where the indication information indicates to perform the first operation on the first SC, and the BC is a BC on which the first SC is to be deployed or has been deployed. The first node in the BC performs the first operation on the first SC in response to the indication information.

In this embodiment of this application, the first network element may send the request information to the second network element, to request to perform the first operation on the first SC that the first network element expects to manage, and the second network element manages, based on the request information, the first BC on which the first SC is deployed, so that a node in the first BC performs the first operation on the first SC. In other words, for the first network element, when the first network element is unaware of the node in the first BC or cannot establish a communication connection to the node in the first BC, the first network element may implement management and control over the first SC through interaction between the second network element and the node in the first BC. Therefore, according to the communication method provided in this embodiment of this application, an SC can be managed and controlled in a decentralized 3GPP network, to implement optimization of a network service.

In a possible implementation, the first operation includes an operation of deploying or deregistering the first SC and/or an operation used to change a status of the first SC in the BC. It may be understood that the SC is a segment of executable code, so that the first operation may be performed via the node in the first BC. Further, the operation of deploying the first SC may be deploying the first SC on a specific chain, that is, deploying the first SC on the first BC, so that the node in the first BC can perform a function corresponding to the first SC. The operation of deregistering the first SC may be offloading the first SC from the first BC, so that the node in the BC cannot initiate any operation to the first SC again. The operation used to change the status of the first SC in the first BC may be changing an invoking status of the first SC in the first BC, for example, whether the node in the first BC can invoke the first SC to execute a corresponding transaction. For example, the operation of deploying the first SC may be that the second network element may deliver source code of the first SC to at least one node in the first BC, and indicate the at least one node to perform compilation; or the second network element may send compiled source code of the first SC (that is, bytecode of the first SC) to at least one node in the first BC, and indicate the at least one node to install the first SC. It should be understood that the operation of deploying the first SC may be installation of the first SC by the node in the first BC, which is not a voluntary behavior of the node in the BC. In addition, deployment of the first SC by the at least one node in the first BC may be deployment by all nodes in the first BC or a part of nodes in the first BC. This is not specifically limited in embodiments of this application. In other words, the operation of deploying the first SC may be performed by a part of nodes in the first BC, for example, may be performed by a part of nodes that satisfy an execution condition for deploying the first SC. Certainly, the node in the first BC that performs the first operation on the first SC may be determined by the second network element. A specific implementation is described in detail in step S602 below, and details are not described herein again. In other words, the first operation is performed on the first SC, so that a life cycle of the first SC can be managed and controlled in the first BC in a unified manner, to implement optimization of an operator network service.

In a possible implementation, the operation used to change the status of the first SC in the first BC includes at least one of the following: a start operation, where the start operation is used to set the status of the first SC in the first BC to an initialized state; a freeze operation, where the freeze operation is used to set the status of the first SC in the first BC to an unavailable state; or an unfreeze operation, where the unfreeze operation is used to transition the status of the first SC in the first BC from the unavailable state to an available state. It may be understood that the first SC is a segment of executable code. After the node in the first BC installs the first SC, the first SC is in an invokable state after a parameter corresponding to the first SC is initialized. In this way, the node in the first BC can invoke the first SC. In other words, the start operation may be that the node in the first BC that installs the first SC starts the first SC. It may be further understood that the freeze operation may be that the first SC is in a non-invokable state in the first BC. The unfreeze operation may be an inverse operation of the freeze operation, that is, reversing the non-invokable state of the first SC to the invokable state. In other words, through the operation used to change the status of the first SC in the first BC, the invoking status of the first SC in the first BC can be flexibly changed, to control whether the node in the first BC can invoke the first SC to perform the function corresponding to the first SC. Therefore, an execution status of the function corresponding to the first SC may be flexibly changed based on a dynamic change feature of the node in the 3GPP network, to implement optimization of a 3GPP network service.

In a possible implementation, the request information includes indication information of the first SC and indication information of the first operation. In other words, the request information may include the indication information of the first SC and the indication information of the first operation, so that the second network element can determine the first SC that the first network element expects to manage and the first operation that the first network element expects to perform.

In a possible implementation, the indication information includes the indication information of the first operation. It may be understood that because one SC may be deployed in the first BC, the indication information may not include the indication information of the first SC.

In a possible implementation, the indication information further includes the indication information of the first SC. It may be understood that the first BC may carry a plurality of SCs, and the indication information of the first SC needs to be delivered, to indicate the first SC to the first node in the first BC.

In a possible implementation, the indication information of the first SC includes identification information of the first SC and/or the function corresponding to the first SC. The identification information of the first SC may include an identifier (identifier, ID) of the first SC. The identifier of the first SC may be an account address (which may also be referred to as a contract address of the first SC), and the account address may be a unique identifier in the BC. Certainly, the identification information of the first SC may include a name of the first SC. The function corresponding to the first SC may be a service ID, and the service ID may uniquely indicate service information (for example, a function and a service type). In other words, the first SC may be determined by using the account address of the first SC and the service ID.

In a possible implementation, the request information further includes an execution condition corresponding to the first operation and/or identification information of the first BC. In other words, the request information may further include the execution condition corresponding to the first operation, so that the second network element determines a node in the first BC that needs to perform the first operation on the first SC. Further, the identification information of the first BC may be used to assist the second network element in determining the first BC corresponding to the first SC.

In a possible implementation, the first node in the first BC is determined based on the execution condition corresponding to the first operation and the identification information of the first BC. It may be understood that in this embodiment of this application, the first node in the first BC may be a node in the BC that is determined by the first network element to perform the first operation on the first SC, for example, may be a node in the first BC that satisfies the execution condition corresponding to the first operation. Certainly, when determining that all nodes in the first BC need to perform the first operation only on the first SC, the second network element may send the indication information to all the nodes in the first BC.

In a possible implementation, the execution condition corresponding to the first operation includes at least one of the following of a node in the first BC that is required for performing the first operation: a capability, an operating environment, a quantity, or a BC node type. It may be understood that an example in which the first operation is a deployment operation is used, and the first SC may be deployed, based on the execution condition, in an environment expected by the first network element for deployment or on a type of device expected by the first network element for deployment. For example, the first network element may expect the first SC to be deployed on a BC node in the first BC that has a trusted execution environment and that is of a non-terminal device type. For another example, the first network element may expect the first SC to be deployed on a node in the first BC that has a high storage capability and a high computing capability, and expect the node to be used as an execution node of the first SC.

In a possible implementation, the capability specifically includes at least one of the following: a computing capability, a storage capability, or a network connection capability. The operating environment specifically includes: being a trusted execution environment or not, and/or a security level of the trusted execution environment. The BC node type specifically includes a device type. For example, the computing capability of the BC node may be a computing speed (for example, a CPU frequency), a calculation capability, or the like of the BC node. The storage capability of the BC node may be a memory size, a local memory size, a read/write rate (or referred to as a read/write bandwidth), or the like of the BC node. The network connection capability of the BC node may be a network connection type provided by the BC node, for example, a 3GPP access connection, a Wi-Fi connection, a Bluetooth connection, or a wired connection. It may be understood that the trusted execution environment (trusted execution environment, TEE) is a concept relative to a non-trusted execution environment (for example, a rich execution environment (rich execution environment, REE)). Installing the first SC in the TEE can reduce a security risk in a running process of the first SC, improving running security of the first SC. It may be further understood that the device type may include a terminal device, a RAN device, a CN device, or the like. It may be understood that based on the device type of the BC node, the first SC may be installed on a BC node of a device type expected by the first network element for running.

In a possible implementation, the first SC is a successfully registered SC. It may be understood that the successfully registered SC may be an SC whose validity of registration is successfully verified by the second network element. Therefore, the SC deployed in the network is an SC whose validity of verification is successfully verified. This can improve security. Further, the successfully registered SC may also facilitate management of the second network element. The second network element may determine, based on registration information of the successfully registered SC, a BC on which the SC is deployed, a function corresponding to the SC, and the like.

In a possible implementation, the first SC is an unregistered SC, the request information further includes data of the first SC, and the first operation includes registering the first SC. In other words, the first network element may register the first SC by sending the request information to the second network element, so that verification on the validity of the first SC succeeds. Therefore, security is improved, and SC management is facilitated.

In a possible implementation, the method provided in the first aspect further includes: The second network element obtains execution result information of performing the first operation on the first SC by the first node in the first BC, where the execution result information includes an execution success, an execution failure, or an execution error type. It may be understood that after delivering the indication information to the first node in the first BC, the second network element needs to obtain a status of execution for the first SC by the first node in the first BC, to feed back an execution result (for example, the execution error type) of performing the first operation on the first SC to the first network element, so that the first network element subsequently manages and controls the first SC.

In a possible implementation, that the second network element obtains the execution result information of performing the first operation on the first SC by the first node in the first BC includes: The first node in the first BC sends the execution result information to the second network element. The second network element receives the execution result information from the first node in the first BC. In other words, the first node in the first BC may actively send the execution result information to the second network element, so that the second network element can obtain the execution result information from the first node in the first BC.

In a possible implementation, the method provided in the first aspect further includes the following steps.

The second network element sends feedback information to the first network element, where the feedback information includes the execution result information of performing the first operation on the first SC by the first node in the first BC. The first network element receives the feedback information from the second network element. In other words, the first network element may receive the feedback information from the second network element, to determine the execution result of performing the first operation on the first SC, so that the first network element manages and controls the first SC, facilitating implementation of 3GPP network optimization.

According to a second aspect, a communication method is provided. The method may be performed by a first network element, may be performed by a component of a first network element, for example, a processor, a chip, or a chip system of the first network element, or may be implemented by a logic module or software that can implement all or a part of functions of a first network element. The following uses an example in which the method is performed by the first network element for description. The method includes: The first network element generates request information, where the request information is used to request to perform a first operation on a first smart contract SC that the first network element expects to manage. The first network element sends the request information to a second network element, where the second network element is deployed in an operator network, the second network element is configured to manage at least one BC, and the at least one BC includes a first BC on which the first SC is to be deployed or has been deployed.

In a possible implementation, the method provided in the second aspect further includes: The first network element receives feedback information from the second network element, where the feedback information includes execution result information of performing the first operation on the first SC by a first node in the first BC, and the execution result information includes an execution success, an execution failure, or an execution error type.

According to a third aspect, a communication method is provided. The method may be performed by a second network element, may be performed by a component of a second network element, for example, a processor, a chip, or a chip system of the first network element, or may be implemented by a logic module or software that can implement all or a part of functions of a second network element. The following uses an example in which the method is performed by the first network element for description. The method includes: The second network element deployed in an operator network receives request information from a first network element, where the request information is used to request to perform a first operation on a first smart contract SC that the first network element expects to manage. The second network element sends indication information to a first node in a first blockchain BC based on the request information, where the indication information indicates to perform the first operation on the first SC, and the first BC is a BC on which the first SC is to be deployed or has been deployed.

In a possible implementation, the method provided in the third aspect further includes: The second network element obtains execution result information of performing the first operation on the first SC by the first node in the first BC, where the execution result information includes an execution success, an execution failure, or an execution error type.

In a possible implementation, that the second network element obtains the execution result information of performing the first operation on the first SC by the node in the first BC includes: The second network element receives the execution result information from the first node in the first BC.

In a possible implementation, the method provided in the third aspect further includes: The second network element sends feedback information to the first network element, where the feedback information includes the execution result information of performing the first operation on the first SC by the first node in the first BC.

With reference to the second aspect or the third aspect, in a possible implementation, the request information includes indication information of the first SC and indication information of the first operation.

With reference to the second aspect or the third aspect, in a possible implementation, the request information further includes an execution condition corresponding to the first operation and/or identification information of the first BC, and the first BC is the BC on which the first SC is to be deployed or has been deployed.

With reference to the second aspect or the third aspect, in a possible implementation, the first SC is an unregistered SC, the request information further includes data of the first SC, and the first operation includes registering the first SC.

According to a fourth aspect, a communication method is provided. The method may be performed by a first node in a first blockchain BC, may be performed by a component of a first node in a first BC, for example, a processor, a chip, or a chip system of the first node in the first BC, or may be implemented by a logic module or software that can implement all or a part of functions of a first node in a first BC. The following uses an example in which the method is performed by the first node in the first BC for description. The method includes: The first node in the first BC receives indication information from a second network element, where the indication information indicates to perform a first operation on a first smart contract SC, the first BC is a BC on which the first SC is to be deployed or has been deployed, and the second network element is deployed in an operator network. The first node in the first BC performs the first operation on the first SC in response to the indication information.

In a possible implementation, the method provided in the fourth aspect further includes:

The first node in the first BC sends execution result information to the second network element, where the execution result information includes an execution success, an execution failure, or an execution error type.

With reference to the third aspect or the fourth aspect, in a possible implementation, the indication information includes indication information of the first operation.

With reference to the third aspect or the fourth aspect, in a possible implementation, the indication information further includes indication information of the first SC.

With reference to the second aspect to the fourth aspect, in a possible implementation, the first operation includes an operation of deploying or deregistering the first SC and/or an operation used to change a status of the first SC in the first BC.

With reference to the second aspect to the fourth aspect, in a possible implementation, the operation used to change the status of the first SC in the first BC includes: a start operation, where the start operation is used to set the status of the first SC in the first BC to an initialized state; a freeze operation, where the freeze operation is used to set the status of the first SC in the first BC to an unavailable state; or an unfreeze operation, where the unfreeze operation is used to transition the status of the first SC in the first BC from the unavailable state to an available state.

With reference to the second aspect to the fourth aspect, in a possible implementation, the indication information of the first SC includes identification information of the first SC and/or a function corresponding to the first SC.

With reference to the second aspect to the fourth aspect, in a possible implementation, the first node in the first BC is determined based on the execution condition corresponding to the first operation and the identification information of the first BC.

With reference to the second aspect to the fourth aspect, in a possible implementation, the execution condition corresponding to the first operation includes at least one of the following of a node in the first BC that is required for performing the first operation: a capability, an operating environment, a quantity, or a BC node type.

With reference to the second aspect to the fourth aspect, in a possible implementation, the capability specifically includes at least one of the following: a computing capability, a storage capability, or a network connection capability. The operating environment specifically includes: being a trusted execution environment or not, and/or a security level of the trusted execution environment. The BC node type specifically includes a device type.

With reference to the second aspect to the fourth aspect, in a possible implementation, the first SC is a successfully registered SC.

For technical effects of the second aspect to the fourth aspect or any one of the implementations of the second aspect to the fourth aspect, refer to the first aspect. Details are not described herein again.

According to a fifth aspect, a communication method is provided. The method may be performed by a first BC node in a blockchain BC, may be performed by a component of a first BC node, for example, a processor, a chip, or a chip system of the first BC node, or may be implemented by a logic module or software that can implement all or a part of functions of a first BC node. The following uses an example in which the method is performed by the first BC node for description. The method includes: The first BC node in the BC sends a transaction request to another BC node in the BC other than the first BC node, where the transaction request is used to request to perform a first operation on a first SC, and the BC is a BC on which the first SC is to be deployed or has been deployed. The first BC node and the another BC node perform transaction consensus to obtain a transaction consensus result of the transaction request, where the transaction consensus result includes that the transaction request is approved or the transaction request fails. The first BC node and the another BC node update a status of the first SC based on the transaction consensus result.

In this embodiment of this application, the first BC node may initiate the transaction request. Then, whether to perform the first operation on the first SC is determined by using a transaction consensus mechanism of the BC, and a result of performing the first operation on the first SC by each BC node is determined by updating the status of the first SC. In this way, the first SC can be managed and controlled in an autonomous manner by a plurality of nodes in the BC on which the first SC is deployed. Therefore, according to the communication method provided in this embodiment of this application, an SC can be managed and controlled in a decentralized 3GPP network, to implement optimization of a network service.

In a possible implementation, the first operation includes an operation of deploying or deregistering the first SC and/or an operation used to change the status of the first SC in the BC.

In a possible implementation, the operation used to change the status of the first SC in the BC includes: a start operation, where the start operation is used to set the status of the first SC in the BC to an initialized state; a freeze operation, where the freeze operation is used to set the status of the first SC in the BC to an unavailable state; or an unfreeze operation, where the unfreeze operation is used to transition the status of the first SC in the BC from the unavailable state to an available state.

In a possible implementation, the transaction request includes indication information of the first operation.

In a possible implementation, the transaction request further includes indication information of the first SC, and the indication information of the first SC includes identification information of the first SC and/or a function corresponding to the first SC.

In a possible implementation, an execution condition corresponding to the first operation includes capability information, environment information, or type information required for performing the first operation.

In a possible implementation, the capability information specifically includes at least one of the following: a computing capability, a storage capability, or a network connection capability. The environment information specifically includes: being a trusted execution environment or not, and/or a security level of the trusted execution environment. The type information specifically includes a device type.

In a possible implementation, the first SC is a successfully registered SC.

In a possible implementation, the method provided in the fifth aspect further includes:

The first BC node sends an updated status of the first SC to a second network element, where the second network element is deployed in an operator network.

According to a sixth aspect, a communication apparatus is provided, to implement the foregoing methods. The communication apparatus may be the first network element in any one of the foregoing aspects or any one of the implementations of the foregoing aspects, an apparatus including the first network element, or an apparatus included in the first network element, for example, a chip. Alternatively, the communication apparatus may be the second network element in any one of the foregoing aspects or any one of the implementations of the foregoing aspects, an apparatus including the second network element, or an apparatus included in the second network element, for example, a chip. Alternatively, the communication apparatus may be the first node in the first blockchain BC in any one of the foregoing aspects or any one of the implementations of the foregoing aspects, an apparatus including the first node in the first blockchain BC, or an apparatus included in the first node in the first blockchain BC, for example, a chip. Alternatively, the communication apparatus may be the first BC node in the blockchain BC in any one of the foregoing aspects or any one of the implementations of the foregoing aspects, an apparatus including the first BC node in the blockchain BC, or an apparatus included in the first BC node in the blockchain BC, for example, a chip.

The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module, respectively configured to implement the sending function and the receiving function in any one of the foregoing aspects and any one of the possible implementations of the foregoing aspects.

According to a seventh aspect, a communication apparatus is provided, including at least one processor. The processor is configured to execute, via a logic circuit and/or through communication, a computer program or instructions stored in a memory, so that the communication apparatus performs the method according to any one of the foregoing aspects.

In a possible implementation, the communication apparatus further includes the memory. Optionally, the memory is integrated with the processor, or the memory may be independent of the processor.

In a possible implementation, the memory is independent of the communication apparatus.

In a possible implementation, the communication apparatus further includes a communication interface, and the communication interface is configured to communicate with a module other than the communication apparatus.

The communication apparatus may be the first network element in any one of the foregoing aspects or any one of the implementations of the foregoing aspects, an apparatus including the first network element, or an apparatus included in the first network element, for example, a chip. Alternatively, the communication apparatus may be the second network element in any one of the foregoing aspects or any one of the implementations of the foregoing aspects, an apparatus including the second network element, or an apparatus included in the second network element, for example, a chip. Alternatively, the communication apparatus may be the first node in the first blockchain BC in any one of the foregoing aspects or any one of the implementations of the foregoing aspects, an apparatus including the first node in the first blockchain BC, or an apparatus included in the first node in the first blockchain BC, for example, a chip. Alternatively, the communication apparatus may be the first BC node in the blockchain BC in any one of the foregoing aspects or any one of the implementations of the foregoing aspects, an apparatus including the first BC node in the blockchain BC, or an apparatus included in the first BC node in the blockchain BC, for example, a chip.

According to an eighth aspect, a computer-readable storage medium is provided. The computer-readable storage medium stores a computer program or instructions. When the computer program or the instructions are run on a communication apparatus, the communication apparatus is enabled to perform the method according to any one of the foregoing aspects or any one of the implementations of the foregoing aspects.

According to a ninth aspect, a computer program product including instructions is provided. When the computer program product is run on a communication apparatus, the communication apparatus is enabled to perform the method according to any one of the foregoing aspects or any one of the implementations of the foregoing aspects.

According to a tenth aspect, a communication apparatus is provided (for example, the communication apparatus may be a chip or a chip system). The communication apparatus includes a processor, configured to implement the functions in any one of the foregoing aspects or any one of the implementations of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus provided in any one of the sixth aspect to the tenth aspect is a chip, the foregoing sending action/function may be understood as outputting, and the foregoing receiving action/function may be understood as inputting.

For technical effects brought by any design manner in the sixth aspect to the tenth aspect, refer to the technical effects brought by different design manners in the first aspect. Details are not described herein again.

According to an eleventh aspect, a communication method is provided. The communication method includes the method according to any one of the second aspect or the implementations of the second aspect and the method according to any one of the third aspect or the implementations of the third aspect.

### BRIEF DESCRIPTION OF DRAWINGS

FIG. 1 is a diagram of a communication architecture of a 3GPP network according to an embodiment of this application;
FIG. 2 is a diagram of an architecture of a decentralized 3GPP network according to an embodiment of this application;
FIG. 3 is a diagram in which a second network element manages a smart contract SC on a blockchain BC according to an embodiment of this application;
FIG. 4 is a diagram of an architecture of a communication system according to an embodiment of this application;
FIG. 5 is a diagram of a structure of a communication apparatus according to an embodiment of this application;
FIG. 6 is a schematic flowchart 1 of a communication method according to an embodiment of this application;
FIG. 7 is a schematic flowchart 2 of a communication method according to an embodiment of this application; and
FIG. 8 is a diagram of a structure of a communication apparatus according to an embodiment of this application.

### DESCRIPTION OF EMBODIMENTS

For ease of understanding technical solutions provided in embodiments of this application, technologies related to this application are first described briefly. The brief descriptions are as follows:

### 1. Blockchain (blockchain, BC)

As described in the background, a BC is a distributed ledger that integrates a plurality of technologies such as cryptography, a P2P network, and a distributed database. In a BC technology, data may be generated and stored in a unit of a block (block), and a chain (chain) data structure is formed based on a time sequence. All nodes in the BC jointly participate in data verification, storage, and maintenance of a blockchain system. A newly created block needs to be confirmed by the nodes in the BC through consensus and broadcast to each node to implement network-wide synchronization. After that, the block cannot be modified or deleted. In the smart contract (smart contract, SC) technology, the foregoing features of the BC may be used to deploy an agreed rule and service logic (or referred to as a function (function)) at an account address on the BC in a manner of a segment of executable code (for example, program code). When an invocation request (or referred to as a transaction) is initiated to the address, the invocation request is verified in the BC under a constraint of a consensus mechanism, and code corresponding to the invocation request is executed, ensuring certainty and uniqueness of an execution result. In other words, code constructed based on an SC may be a decentralized application (decentralized application, DAPP).

In a blockchain network, an SC may be compiled, installed, and run by a user on a blockchain node (or referred to as a BC node). A conventional blockchain system may include a blockchain client on a user side and a BC node on a network side, and the SC may be implemented as a program run in a virtual machine, a container, or the like. The blockchain client may be an application run on a terminal device of a user, or a terminal device of a user. The BC node may be a terminal device or a server. Generally, when the user side triggers execution of a transaction, the blockchain client on the user side may send, to a node in a BC, a transaction request that carries a user parameter, and invoke an SC program (that is, a DAPP) on a node side in the BC, to complete the transaction by running the DAPP. On the node side in the BC, the DAPP can automatically perform a predefined function based on external input information, and complete a transition of a related status within the BC. A structure obtained by executing the SC is referred to as a transaction or a transaction structure, and the structure may include information such as a status data read/write set, a contract execution result, and a contract execution environment signature. The node in the BC may return the structure to the blockchain client. The blockchain client may send the structure to the blockchain ordering node, so that the blockchain ordering node performs subsequent processes of transaction ordering, block production, and the like.

It should be understood that the SC released (or referred to as deployed (deployment)) on the BC is actually executable code stored on the blockchain. The executable code may be bytecode (or referred to as machine code) that is compiled from source code of the SC and that can be executed by the virtual machine (or the container, a processor, or the like). In other words, deploying the SC on the BC may be delivering the machine code or the source code of the SC to the BC network. It may be understood that the source code of the SC is delivered to the BC network, and the BC node may locally compile the source code of the SC to obtain the machine code of the SC, and execute, by using the machine code of the SC, the SC program corresponding to the SC.

The following describes some SC deployment solutions.

### 2. SC deployment solution on an internet (internet)

The SC deployment solution on the internet is essentially open-environment SC deployment with no admission condition, which is a voluntary behavior of a user. In a process of deploying an SC, the user may compile the SC based on a requirement and a rule of a selected blockchain platform, perform local compilation by using a blockchain client, to obtain machine code of the SC, and release the machine code of the SC to a corresponding blockchain system as a transaction. In the foregoing process, the blockchain platform performs only basic rule review on the blockchain client, for example, checks whether a syntax or compilation error occurs. When the transaction is accepted by a consensus mechanism of the blockchain system, the SC is successfully deployed.

It should be understood that for a releaser of the SC (that is, the blockchain client of the user), the entire blockchain network is transparent. In other words, the blockchain client is unaware of a BC node.

It should be further understood that whether the BC node installs the SC deployed on a BC is also a voluntary behavior of the user, that is, the BC node may choose whether to install the SC.

### 3. SC management solution for a consortium blockchain

Unlike the open SC deployment mode with no admission condition on the internet, a deployment mode for a consortium blockchain requires permissions of consortium members (consortium members) of a blockchain to deploy an SC in a blockchain network. However, a contract deployment admission condition in the consortium blockchain is designed for a non-consortium member. For a child node of a consortium member, there is no solution of how to deploy an SC in a network domain managed by the child node, for example, manage a life cycle (from deployment to deregistration) of an SC in the network domain.

### 4. Communication network service

An embodiment of this application provides a decentralized communication network, for example, a decentralized 3GPP network. The network may provide a decentralized 3GPP network service (which may also be referred to as a 3GPP network function or a 3GPP network service function). A function in the 3GPP network may include a network function (network function, NF) and a service function. The NF may include a function corresponding to a core network (core network, CN), for example, an access and mobility management function (access and mobility management function, AMF), an authentication server function (authentication server function, AUSF), a session management function (session management function, SMF), a network exposure function (network exposure function, NEF) network element, a network function repository function (NF repository function, NRF), a policy control function (policy control function, PCF), unified data management (unified data management, UDM), an application function (application function, AF), a user plane function (user plane function, UPF), or a network slice selection function (network slice selection function, NSSF). The service function may include a function corresponding to a third-party service. The third-party service is, for example, an internet of things service, a satellite communication service, or a cloud service. This is not specifically limited in embodiments of this application.

In the decentralized 3GPP network (for example, including an operator network), the decentralized 3GPP network service may mean that the function in the 3GPP network is deployed on a node having a BC capability in the 3GPP network in a manner of a DAPP (that is, an SC). Specifically, a ledger function is deployed on the node having the BC capability (for example, a terminal device, a radio access network (radio access network, RAN) device, a core network (core network, CN) device, and a functional network element) in the 3GPP network. Each node located in a same BC in the 3GPP network synchronizes BC data (or referred to as ledger data), where the BC data includes data of an SC, so that each node deploys the SC, and performs, under a constraint of a consensus mechanism, a function corresponding to the SC. The function corresponding to the SC may include the 3GPP network function, that is, the SC deployed by each node provides the network service. It may be understood that due to a characteristic of decentralization of the BC, driven by the consensus mechanism, a malicious or incorrect behavior of a single node does not affect a final execution result of the SC, so that robustness and an attack defense capability of the 3GPP network can be enhanced.

Further, due to the characteristic of decentralization of the BC, each node in the 3GPP network participates in BC data query, transaction, backup, consensus, operation and maintenance, or the like to different degrees. Considering that the node in the 3GPP network has characteristics of high heterogeneous complexity and high dynamicity, to implement optimization of the 3GPP network service, in a specific implementation of the decentralized 3GPP network, the 3GPP network needs to manage and control the SC. For example, when a status of the node in the BC changes, a new SC may need to be deployed on the BC, or a running status of a deployed SC may be changed (for example, the SC is set to an unavailable state or transitioned from an unavailable state to an available state), so that optimization of the 3GPP network service is implemented by managing the SC in the BC.

For the SC deployment solution on an internet, because SC deployment and SC installation are voluntary actions of a BC node, and the entire blockchain network is transparent to the blockchain client, unified management of the SC cannot be implemented, SC deployment cannot be optimized based on a network architecture and infrastructure specific to the 3GPP network, and interaction and control between functional network elements cannot be implemented during an SC deployment process.

For an SC management solution for a consortium blockchain, for the 3GPP network, due to the characteristics of heterogeneous complexity of the node and high dynamicity of the node, in a decentralized 3GPP scenario, even if the 3GPP network is already a member of a consortium blockchain, the SC still needs to be managed, to implement optimization of the 3GPP network service.

Based on this, an embodiment of this application provides a communication method, to manage and control an SC in a decentralized 3GPP network.

The following describes the technical solutions in embodiments of this application with reference to the accompanying drawings in embodiments of this application.

For ease of understanding embodiments of this application, the following descriptions are provided before embodiments of this application are described.
1. In embodiments of this application, a 3GPP network may include an operator network. The 3GPP network may include one or more operator networks.
2. In embodiments of this application, a "network element" and a "node" may be logical entities or physical entities. In other words, in embodiments of this application, "apparatus" and "network element" may be replaced for description. This is uniformly described herein, and details are not described below again.
3. In embodiments of this application, for ease of description, when numbering or indexing is involved, numbering may be performed consecutively starting from 1, may be performed consecutively starting from 0, or may be performed starting from any parameter.
4. "Predefinition", "preconfiguration", or "agreement in a protocol" may be implemented by pre-storing corresponding code or a table in a device (for example, a first apparatus, a second network element, or a second apparatus), or in another manner that may indicate related information. A specific implementation thereof is not limited in embodiments of this application. "Stored" may refer to being stored in one or more memories.
5. A "protocol" in embodiments of this application may be a standard protocol in the communication field, for example, may include a long term evolution (long term evolution, LTE) protocol, a new radio (new radio, NR) protocol, and a related protocol applied to a future communication system (for example, a 6G communication system). This is not limited in embodiments of this application.
6. In embodiments of this application, descriptions such as "when...", "in a case of...", and "if" all mean that a device (for example, a first apparatus, a second network element, or a second apparatus) performs corresponding processing in an objective case. These descriptions are not intended to limit time, do not require the device to perform a determining action during implementation, and do not mean that there is another limitation.
7. In embodiments of this application, "sending information to... (a second network element)" may be understood as that a destination end of the information is the second network element, and may include directly or indirectly sending the information to the second network element. "Receiving, from... (a first network element), information" or "receiving information from... (a first network element)" may be understood as that a source end of the information is the first apparatus, and may include directly or indirectly receiving the information from the first apparatus. Information may undergo necessary processing, for example, a format change, between a source end and a destination end for sending of the information. However, the destination end may understand valid information from the source end. A similar expression in this application may be understood similarly, and details are not described herein again.
8. In descriptions of embodiments of this application, unless otherwise specified, "and/or" in embodiments of this application represents that three relationships may exist. For example, "A and/or B" may represent the following three cases: Only A exists, both A and B exist, and only B exists, where A and B may be singular or plural. In addition, "at least one of the following items (pieces)" or a similar expression means any combination of these items, including a single item (piece) or any combination of a plurality of items (pieces). In addition, to clearly describe the technical solutions in embodiments of this application, words such as "first" and "second" are used in embodiments of this application to distinguish between same items or similar items that have basically a same function and effect. A person skilled in the art may understand that the words such as "first" and "second" do not limit a quantity and an execution sequence, and the words such as "first" and "second" do not indicate a definite difference. In addition, in embodiments of this application, terms such as "example" or "for example" are used to represent giving an example, an illustration, or a description.

Embodiments of this application may be applied to an LTE system or an NR system (which may also be referred to as a 5th generation (5th generation, 5G) system), an LTE-NR hybrid networking system, an internet of vehicles (vehicle-to-everything, V2X) system, a device-to-device (device-to-device, D2D) system, a machine-to-machine (machine-to-machine, M2M) communication system, an internet of things (internet of things, IoT) system (for example, a narrowband internet of things (narrowband internet of things, NB-IoT) system), a system evolved after 5G such as a 6G system, another next generation communication system, and the like. Alternatively, the communication system may be an open radio access network (open radio access network, O-RAN or ORAN), a cloud radio access network (cloud RAN, CRAN), or a wireless fidelity (wireless fidelity, Wi-Fi) system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the communication architecture and the emergence of new service scenarios, the technical solutions provided in embodiments of this application are also applicable to similar technical problems.

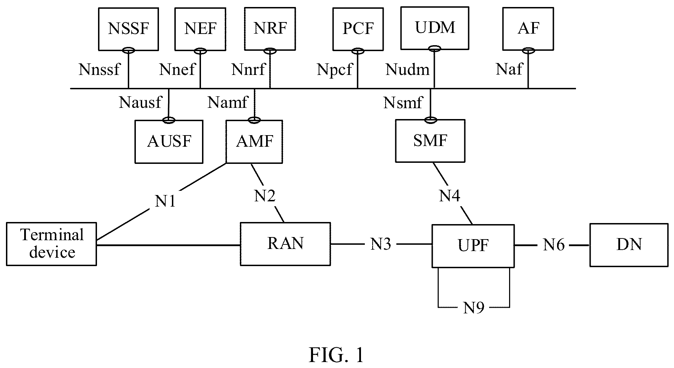

FIG. 1 is a diagram of a communication architecture of a 3GPP network according to an embodiment of this application. As shown in FIG. 1, the communication architecture of the 3GPP network includes an access network (access network, AN) and a core network (core network, CN), and may further include a terminal device.

### For the terminal device

In a possible implementation, the terminal device in this embodiment of this application may be a device configured to implement a wireless communication function, for example, a terminal or a chip that can be used in a terminal. The terminal may be user equipment (user equipment, UE), an access terminal, a terminal unit, a terminal station, a mobile station, a remote station, a remote terminal, a mobile device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like.

### For the AN

In a possible implementation, the AN is used to implement an access-related function, may provide a network access function for an authorized user in a specific region, and can determine transmission links of different quality based on a user level, a service requirement, and the like, to transmit user data. The AN forwards control data and the user data between the terminal device and the CN. The AN may include a radio access network device, which may also be referred to as a RAN device or a RAN node.

In a possible implementation, the RAN device may be a transmission and reception point (transmission and reception point, TRP), a base station, a remote radio unit (remote radio unit, RRU) or a baseband unit (baseband unit, BBU) (which may also be referred to as a digital unit (digital unit, DU)) of a split base station, a broadband network service gateway (broadband network gateway, BNG), an aggregation switch, a non-3GPP access device, a relay station, an access point, or the like. The network device may be a macro base station, a micro base station or an indoor base station, a relay node or a donor node, or a radio controller in a CRAN scenario. Optionally, the RAN device may alternatively be a server, a wearable device, a vehicle, a vehicle-mounted device, or the like. For example, the RAN device in a V2X system may be a roadside unit (roadside unit, RSU). In addition, the RAN device in this embodiment of this application may be an eNB or an eNodeB (evolved NodeB) in LTE, a radio controller in a CRAN scenario, a base station (for example, a next generation NodeB (gNodeB, gNB)) in a 5G communication system, a base station in a future evolved system (for example, a 6G communication system), or the like. This is not specifically limited herein.

Further, in a possible implementation, in some deployments, the RAN device may include a central unit (central unit, CU), a DU, a CU-control plane (control plane, CP), a CU-user plane (user plane, UP), or a radio unit (radio unit, RU). The gNB may further include an active antenna unit (active antenna unit, AAU). The CU implements a part of functions of the gNB, and the DU implements a part of functions of the gNB. For example, the CU is responsible for processing a non-real-time protocol and a service, and implements functions of a radio resource control (radio resource control, RRC) signaling layer and/or a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the RAN device may be a device including one or more of a CU node, a DU node, and an AAU node. In addition, the CU may be classified as a RAN device in a RAN, or the CU may be classified as a RAN device in the CN. This is not limited in embodiments of this application.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as an example for description in this embodiment of this application. Any one of the CU (or the CU-CP and the CU-UP), the DU, and the RU in this embodiment of this application may be implemented by using a software module, a hardware module, or a combination of a software module and a hardware module.

### For the CN

It should be understood that the CN is mainly responsible for maintaining subscription data of a mobile network, and provides session management, mobility management, policy management, security authentication, and other functions for the terminal device. The CN may include a network function (network function, NF) network element. The NF network element in the CN may be deployed on one or more CN devices, and the CN device may be deployed on a network side or a cloud side. This is not specifically limited in embodiments of this application.

Further, NF network elements shown in FIG. 1 may include an access and mobility management function (access and mobility management function, AMF) network element, an authentication server function (authentication server function, AUSF) network element, a session management function (session management function, SMF) network element, a user plane function (user plane function, UPF) network element, a unified data management (unified data management, UDM) network element, a network exposure function (network exposure function, NEF) network element, a network function repository function (NF repository function, NRF) network element, a network slice selection function (network slice selection function, NSSF) network element, a policy control function (policy control function, PCF) network element, and control plane functions such as an application function (application function, AF). The foregoing network elements may interact with each other by using service-based interfaces. For example, a service-based interface exhibited by the AUSF network element is Nausf; a service-based interface exhibited by the AMF network element is Namf; a service-based interface exhibited by the SMF network element is Nsmf; a service-based interface exhibited by the NSSF network element is Nnssf; a service-based interface exhibited by the NEF network element is Nnef; a service-based interface exhibited by the NRF network element is Nnrf; a service-based interface exhibited by the PCF network element is Npcf; a service-based interface exhibited by the UDM network element is Nudm; and a service-based interface exhibited by the AF network element is Naf.

The AMF network element is mainly responsible for mobility management and access management. The AMF network element may receive, through an N1 interface, a non-access stratum (non-access stratum, NAS) message (including mobility management (mobility management, MM) signaling and session management (session management, SM) signaling) from the terminal device and related signaling (for example, N2 signaling at a base station granularity that is exchanged with the AMF) from the RAN device, to complete a user registration procedure, SM signaling forwarding, and mobility management.

The AUSF network element may be configured to support authentication of 3GPP access and non-3GPP access (for example, wireless local area network (wireless local area network, WLAN) access or satellite access). The AUSF network element may be configured to perform an authentication service and generate a key, to implement bidirectional authentication on the terminal device. For example, in a master authentication and key agreement process between the AMF network element and the terminal device, the AUSF network element may complete authentication on the terminal device.

The SMF network element is mainly for session management in the mobile network, for example, is responsible for user plane network element selection, user plane network element redirection, internet protocol (internet protocol, IP) address allocation, bearer establishment, modification, and release, and quality of service (quality of service, QoS) control.

The UPF network element is configured to route and forward a packet, perform QoS processing on user plane data, and the like.

The UDM network element is configured to process a user identifier, access authentication, registration of a serving network element, mobility management, or the like.

The NEF network element mainly provides a service, so that the 3GPP network can securely provide a network service capability for a third-party service provider application function network element.

The NRF network element may provide a registration function, for example, support a service discovery function, that is, receive an NF discovery request from an NF network element, and provide information about a discovered NF for the NF network element.

The NSSF network element is configured to select a network slice and the like for the terminal device.

The PCF network element includes a user subscription data management function, a policy control function, a charging policy control function, QoS control, and the like, is a unified policy framework for guiding a network behavior, and provides policy rule information and the like for a control plane function network element (for example, the AMF network element).

The AF network element is mainly configured to provide application layer information for the 3GPP network. For example, the AF network element may include a service capability server (service capability server, SCS) or an application server (application server, AS).

It should be understood that FIG. 1 merely provides some examples of network elements or entities in the 5G network. The 5G network may further include some network elements or entities that are not shown in FIG. 1, such as a network data analytics function (network data analytics function, NWDAF). A network evolved after 5G may further include other network functions, such as artificial intelligence (artificial intelligence, AI), computing, and perception-related functions. In addition, names of the foregoing network elements may be different in the network evolved after 5G. This is not limited in this application.

Further, as shown in FIG. 1, the terminal device accesses the CN via the RAN device, and the terminal device may communicate with the AMF network element through the N1 interface (N1 for short). The RAN device communicates with the AMF network element through an N2 interface (N2 for short). The RAN device communicates with the UPF network element through an N3 interface (N3 for short). The SMF network element communicates with the UPF network element through an N4 interface (N4 for short). Different UPF network elements communicate with each other through an N9 interface (N9 for short). The UPF network element accesses a data network (data network, DN) through an N6 interface (N6 for short).

It should be understood that as described above regarding the AUSF network element, access of the terminal device to the CN may include 3GPP access and non-3GPP access. When accessing the CN by using a 3GPP access technology, the terminal device accesses the CN via the RAN device. When accessing the CN by using a non-3GPP access technology, the terminal accesses the CN via a non-3GPP access gateway (non-3GPP gateway, N3G-GW).

It may be understood that in embodiments of this application, a terminal device that accesses the CN via a RAN device may be referred to as a 3GPP terminal device, and a terminal device that accesses the CN via an N3G-GW may be referred to as a non-3GPP terminal device. This is uniformly described herein, and details are not described below again.

Further, there may be a plurality of terminal devices in FIG. 1. The plurality of terminal devices may form a personal internet of things network (personal IoT network, PIN). The PIN is a multi-node organization manner, and generally includes a member node, a management node, and a gateway node. Further, one member node may serve as the management node and the gateway node. Member nodes may communicate with each other by using the non-3GPP access technology, and the member node may communicate with the CN via the gateway node. The gateway node may have a 3GPP access capability. For example, the member node may be the foregoing non-3GPP terminal device, and the gateway node may be the foregoing N3G-GW.

Alternatively, to improve communication efficiency between terminal devices that are close to each other, the plurality of terminal devices may exchange data in a short-distance direct communication manner, for example, exchange data in a proximity-based services (Proximity-based services, ProSe) mode. The ProSe mode may mean that the terminal devices directly perform data exchange with each other, or perform data exchange with each other via the foregoing N3G-GW.

The following describes an architecture of a decentralized 3GPP network based on the communication architecture of the 3GPP network and an SC deployment manner.

In embodiments of this application, the decentralized 3GPP network may include a decentralized 3GPP network service (which may also be referred to as a 3GPP network function or a 3GPP network service function). A 3GPP function in the 3GPP network may include an NF and a service function. The NF may include a function corresponding to a CN, for example, an AMF, an AUSF, an SMF, an NEF, an NRF, a PCF, UDM, an AF, a UPF, or an NSSF. The service function may include a function corresponding to a third-party service. The third-party service is, for example, an internet of things service, a satellite communication service, or a cloud service. This is not specifically limited in embodiments of this application.

Further, in the decentralized 3GPP network, the decentralized 3GPP network service may mean that the function in the 3GPP network is deployed on a node having a BC capability in the 3GPP network in a manner of a DAPP (that is, an SC).

BC is a distributed ledger technology, and a ledger function may be deployed on a node (for example, a terminal device, a RAN device, a CN device, and a functional network element) having a BC capability in the 3GPP network. Each node located in a same BC in the 3GPP network synchronizes BC data (or referred to as ledger data), where the BC data includes data of an SC, so that each node deploys the SC, and performs, under a constraint of a consensus mechanism, a function corresponding to the SC. The function corresponding to the SC may include a 3GPP network function, that is, a network service is provided by using the SC deployed by each node. It may be understood that due to the characteristic of decentralization of the BC, driven by the consensus mechanism, a malicious or incorrect behavior of a single node does not affect a final execution result of the SC, so that robustness and an attack defense capability of the 3GPP network can be enhanced.

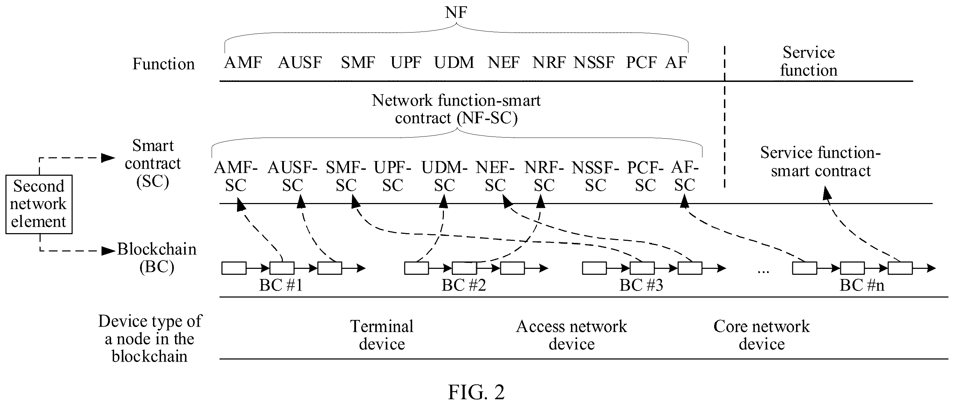

FIG. 2 is a diagram of an architecture of a decentralized 3GPP network according to an embodiment of this application. As shown in FIG. 2, the architecture of the 3GPP network may include a second network element and at least one BC managed by the second network element. The second network element has a management function, where the management function is used to manage and control the at least one BC, for example, life cycle management of an SC, including deployment, deregistration, or the like. The at least one BC is a BC in the 3GPP network, that is, a device type of a node in each BC in the at least one BC may include the foregoing terminal device, RAN device, or CN device.

It may be understood that the node in the BC may further include an independent node (independent node, INN). The INN may be a node that has a BC capability but does not participate in a wireless communication service of the terminal device and/or the RAN device, for example, an edge computing (edge computing, EC) node.

Further, the foregoing RAN and CN are infrastructure in the 3GPP network (that is, an operator network), and may jointly provide a 3GPP function, for example, the foregoing NF, the service function, or a network access and data transmission function provided by a RAN. In other words, in the decentralized 3GPP network, the foregoing 3GPP function is implemented by the SC. For example, as shown in FIG. 2, the NF may be implemented by a network function-smart contract (NF-SC), and the service function may be implemented by a service function-smart contract, so that the NF-SC and the service function-smart contract may be deployed on each BC in the at least one BC.

For example, as shown in FIG. 2, the at least one BC may include a BC #1 to a BC #n, and SCs deployed on all of the BC #1 to the BC #n are different. Two NF-SCs, that is, an AMF-SC and an AUSF-SC, may be deployed on the BC #1. A UDM-SC and an NRF-SC may be deployed on the BC #2. An SMF-SC and an NEF-SC may be deployed on the BC #3. An AF-SC and a service function-smart contract may be deployed on the BC #n. Certainly, nodes in all of the BC #1 to the BC #n are not completely the same. For example, a node in the 3GPP network may be a member in both the BC #1 and the BC #3. In other words, in this embodiment of this application, the node in the 3GPP network may join a plurality of BCs.

It should be understood that the manner of deploying an SC on a BC shown in FIG. 2 is merely an example. For example, as the network evolves, SCs deployed on different BCs may be at least partially the same. This is not specifically limited in embodiments of this application.

In a possible implementation, the second network element may be a CN network element. The second network element may be a management plane network element, or the second network element may be a control plane network element. It may be understood that the second network element may be a new network element in the CN, for example, a ledger anchor function (ledger anchor function, LAF) network element.

Optionally, the second network element may be an independently deployed CN network element. Alternatively, the second network element may be deployed in an overlaid manner with the foregoing CN network element. For example, the management function of the second network element may be deployed in an overlaid manner with the foregoing AMF network element.

Optionally, the second network element may be independent of the BC. For example, the second network element may be a network element that does not join any BC in the 3GPP network. Alternatively, the second network element may be a node in the BC, and a function corresponding to an SC deployed on the BC is the management function of the second network element. In other words, the management function of the second network element may be implemented by the SC, and the management function is further provided in a decentralized manner.

It should be further understood that in this embodiment of this application, the 3GPP network may include one or more operator networks, and the second network element may manage BCs in the one or more operator networks. In other words, the second network element may manage the BCs across the operator networks.

It may be understood that the second network element may be deployed on a CN side, or may be deployed on a RAN side. For example, the second network element may be deployed in an O-DU, an O-CU, an O-RU, an O-RAN intelligent controller (O-RAN intelligent controller), or the like. This is not specifically limited in embodiments of this application.

It may be further understood that in this embodiment of this application, the second network element is merely an example for description, and may alternatively be described as a BC network element, a BC control network element, a BC management and control network element, an SC network element, an SC control network element, an SC management and control network element, a BC management controller, or the like.

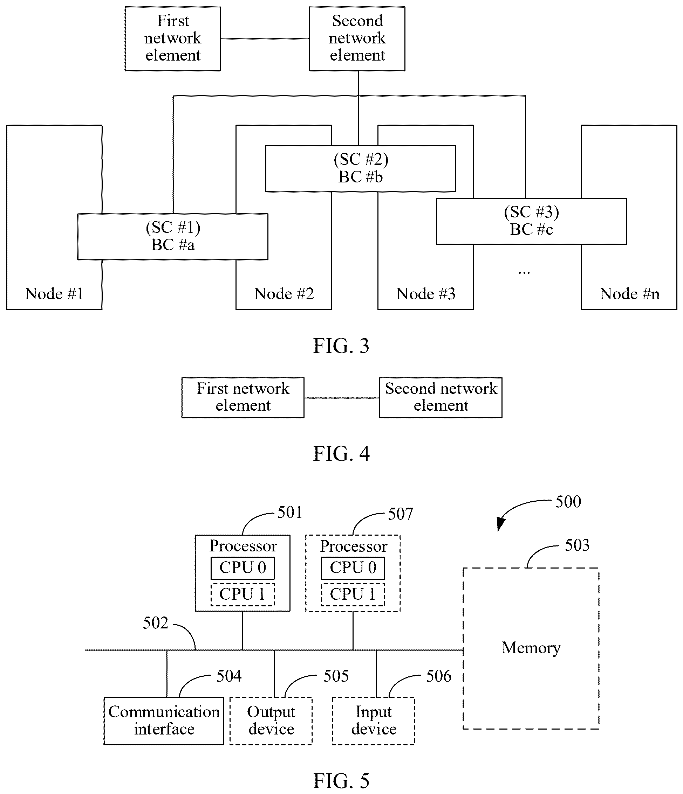

FIG. 3 is a diagram in which the second network element manages an SC on a BC according to an embodiment of this application. As shown in FIG. 3, the BC managed by the second network element is a BC #a, a BC #b, and a BC #c, and existing nodes in the BCs include a node #1 to a node #n. The node #2 is located in the BC #a and the BC #b, the node #3 is located in the BC #b and the BC #c, and the node #1 is located in the BC #a. The second network element may indicate, based on a request of a first network element (or referred to as a first node) for an operation on the SC, a node in the BC to perform the operation on the SC. For example, in response to request information from the first network element (for example, the request information may be used to request deployment of the SC #1 on the BC #a, deployment of the SC #2 on the BC #b, and deployment of the SC #3 on the BC #c), the second network element may indicate the node in the BC #a to deploy the SC #1, indicate the node in the BC #b to deploy the SC #2, and indicate the node in the BC #c to deploy the SC #3.

It should be understood that as described in the foregoing "blockchain", the SC is a segment of executable code. Therefore, the second network element may manage the SC by performing a corresponding management operation with a node in a BC on which the SC is deployed.

The first network element may be an AF network element, or an operation administration and maintenance (operation administration and maintenance, OAM) network element, or another network element. For example, if the first network element is an AF network element, the first network element may communicate with the second network element via an NEF network element. For another example, if the first network element is OAM, the first network element may communicate with the second network element via an NRF. For another example, the first network element may preconfigure information for interaction with the second network element, for example, an identifier or address information.

In this embodiment of this application, the first network element may obtain related information of the second network element (for example, an address of the second network element or an identifier of the second network element) by accessing the 3GPP. Alternatively, the second network element may be aware of the first network element via another network element (for example, a UDM network element), to establish a communication connection to the first network element. In other words, the first network element and the second network element may exchange information with each other.

Further, the first network element may be deployed on the CN side, the RAN side, or a terminal side (for example, a 3GPP terminal or a non-3GPP terminal). This is not specifically limited in embodiments of this application.

Optionally, the first network element may be a node in a BC, and an NF-SC may be deployed in the BC, or no NF-SC may be deployed in the BC. This is not specifically limited in embodiments of this application.

It may be understood that the first network element may also be referred to as a network management plane, a service, a contract manager, an SC management network element, a chain manager, a chain management network element, a BC manager, or the like. This is not specifically limited in embodiments of this application.

It should be understood that due to the characteristic of a highly dynamic change of a 3GPP network node, at least one of the following cases may exist between the first network element and a node in a BC.

Case 1: The first network element may not be aware of the node in the BC, that is, the node in the BC is transparent to the first network element.

Case 2: The first network element may be aware of at least a part of BC nodes in a part of BCs, and may establish communication connections to nodes in the part of BCs. For example, the first network element may be deployed on a node in a BC, and the first network element may establish, via the node, a communication connection to a node in the BC other than the node in the BC.

Case 3: The first network element may be aware of at least a part of BC nodes in the BC, but cannot communicate with the nodes in the BC. For example, the first network element may be aware of the node in the BC, but cannot obtain an identifier or address information corresponding to the node. As a result, the first network element cannot communicate with the node in the BC.

For example, for the decentralized 3GPP network shown in FIG. 2, a plurality of BCs have been constructed in the 3GPP network. If the first network element is a terminal device, the first network element may first access the RAN, and then access the 3GPP network by using the BC #1 on which the AMF-SC is deployed.

It may be understood that if there is no BC on which the AMF-SC is deployed in the 3GPP network, the AMF network element in the 3GPP network may be used to access the 3GPP network. Similarly, when accessing the 3GPP network, the RAN device and the core network device may access the 3GPP network by using a BC on which a corresponding NF-SC is deployed, or may access the 3GPP network via a corresponding network element in the 3GPP network.

It should be understood that, names of the first network element and the second network element may be different in the network evolved after 5G. This is not limited in this application.

FIG. 4 is a diagram of an architecture of a communication system to which a communication method provided in embodiments of this application is applicable. The communication system may include a first network element and a second network element. The first network element or the second network element may be a logical entity, or may be a physical entity. For example, the first network element or the second network element may be a terminal device or a chip of a terminal device. For another example, the first network element or the second network element may be a RAN device or a chip of a RAN device. For another example, the first network element or the second network element may be a CN device or a chip of a CN device. This is not specifically limited in embodiments of this application.

In a possible implementation, the first network element generates request information, and sends the request information to the second network element, where the request information is used to request to perform a first operation on a first SC that the first network element expects to manage, the second network element is deployed in an operator network, the second network element is configured to manage at least one BC, and the at least one BC includes a first BC on which the first SC is to be deployed or has been deployed.

In this embodiment of this application, the first network element may send the request information to the second network element, to request to perform the first operation on the first SC that the first network element expects to manage, and the second network element manages, based on the request information, the first BC on which the first SC is deployed, so that a node in the first BC performs the first operation on the first SC. In other words, for the first network element, when the first network element is unaware of the node in the first BC or cannot establish a communication connection to the node in the first BC, the first network element may implement management and control over the first SC through interaction between the second network element and the node in the first BC. Therefore, according to the communication method provided in embodiments of this application, an SC can be managed and controlled in a decentralized 3GPP network, to implement optimization of a network service.

A specific implementation of the foregoing solution is described in detail in the following embodiments. Details are not described herein.

In another possible implementation, a first BC node sends a transaction request to another BC node in a BC other than the first BC node, where the transaction request is used to request to perform a first operation on a first SC. The first BC node and the another node perform transaction consensus to obtain a transaction consensus result of the transaction request. The first BC node and the another BC node update a status of the first SC based on the transaction consensus result. The BC is a BC on which the first SC is to be deployed or has been deployed. The transaction consensus result includes that the transaction request is approved or the transaction request fails.

In this embodiment of this application, the first BC node may initiate the transaction request. Then, whether to perform the first operation on the first SC is determined by using a transaction consensus mechanism of the BC, and a result of performing the first operation on the first SC by each BC node is determined by updating the status of the first SC. In this way, the first SC can be managed and controlled in an autonomous manner by a plurality of nodes in the BC on which the first SC is deployed. Therefore, according to the communication method provided in embodiments of this application, an SC can be managed and controlled in a decentralized 3GPP network, to implement optimization of a network service.

It may be understood that the apparatus or the network element included in the communication system shown in FIG. 4 is merely an example for description, and constitutes no limitation on embodiments of this application. Actually, in the communication system shown in FIG. 4, there may be one or more first network elements, and there may be one or more second network elements. Further, the communication system in FIG. 4 may further include another apparatus or network element that has an interaction relationship with the apparatus or network element shown in the figure, for example, a first node in a BC. Deployment of the first SC on the BC is not specifically limited herein.

In a possible implementation, the first network element, the second network element, and the first node in the BC in this embodiment of this application may also be referred to as communication apparatuses, and may be a general-purpose device or a dedicated device. This is not specifically limited in embodiments of this application.

In a possible implementation, related functions of the first network element, the second network element, and the first node in the BC in this embodiment of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function run on dedicated hardware, a combination of hardware and software, or a virtualization function instantiated on a platform (for example, a cloud platform).

For example, the related function of the first network element, the second network element, or the first node in the BC in this embodiment of this application may be implemented by a communication apparatus 500 in FIG. 5. FIG. 5 is a diagram of a structure of the communication apparatus 500 according to an embodiment of this application. The communication apparatus 500 includes one or more processors 501, a communication line 502, and at least one communication interface (FIG. 5 is described merely by using an example in which a communication interface 504 and one processor 501 are included). The communication apparatus 500 may further include a memory 503.

The processor 501 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 502 may include a path, and is configured to connect different components.

The communication interface 504 may be a transceiver module, configured to communicate with another device or a communication network, for example, Ethernet, a RAN, or a WLAN. For example, the transceiver module may be an apparatus such as a transceiver or a transceiver machine. In a possible implementation, the communication interface 504 may alternatively be a transceiver circuit in the processor 501, and is configured to implement signal input and signal output of the processor.

The memory 503 may be an apparatus with a storage function, for example, may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another optical disk storage, optical disc storage (including a compressed optical disc, a laser disc, an optical disc, a digital versatile optical disc, a Blu-ray disc, and the like), a magnetic disk storage medium or another magnetic storage device, or any other medium capable of carrying or storing desired program code in a form of an instruction or a data structure and accessible by a computer. The memory may exist independently, and is connected to the processor through the communication line 502. Alternatively, the memory may be integrated with the processor.

The memory 503 is configured to store computer-executable instructions for executing the solutions of this application, and the processor 501 controls the execution. The processor 501 is configured to execute the computer-executable instructions stored in the memory 503, to implement the communication method provided in embodiments of this application.

Alternatively, in this embodiment of this application, the processor 501 may perform a processing-related function in the communication method provided in the following embodiments of this application, and the communication interface 504 is responsible for communication with the another device or the communication network. This is not specifically limited in embodiments of this application.

In a possible implementation, the memory 503 in this embodiment of this application may be further configured to store information or parameters described in the following embodiments, for example, the request information, the first feedback information, and the data of the first SC.

The computer-executable instructions in this embodiment of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 507 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 500 may further include an output device 505 and an input device 506. The output device 505 communicates with the processor 501, and may display information in a plurality of manners.

The communication apparatus 500 may be a general-purpose apparatus or a dedicated apparatus. For example, the communication apparatus 500 may be any one of the foregoing possible terminal devices or network devices, or an apparatus in a terminal device or a network device.

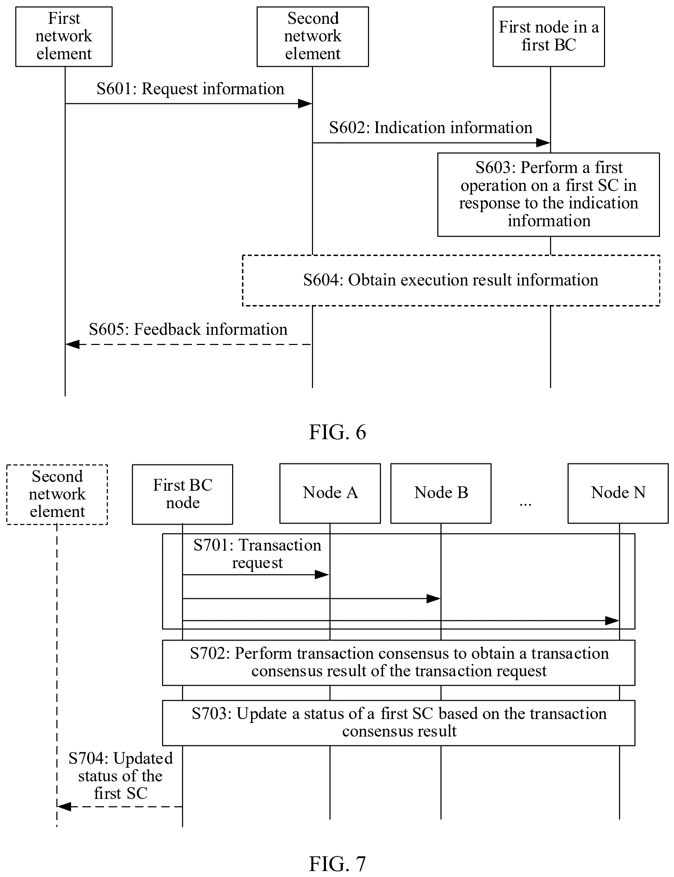

The following describes the communication method provided in embodiments of this application in detail with reference to FIG. 6.

It should be understood that in the following embodiments of this application, a name of information between devices or a name or the like of each parameter in the information is merely an example, and may alternatively be another name during specific implementation. This is not specifically limited in embodiments of this application.

Interaction between a first network element, a management network element, and a first node in a BC shown in FIG. 6 is used as an example. FIG. 6 shows a communication method according to an embodiment of this application. The method includes the following steps.

Step S601: The first network element sends request information to the second network element deployed in an operator network, where the request information is used to request to perform a first operation on a first SC that the first network element expects to manage.

Step S602: The second network element sends indication information to the first node in the first BC based on the request information, where the indication information indicates to perform a first operation on a first SC, and the first BC is a BC on which the first SC is to be deployed or has been deployed

Step S603: The first node in the first BC performs the first operation on the first SC in response to the indication information.

The following separately describes the foregoing steps S601 to S603 in detail.

### For step S601

It should be understood that according to the related descriptions of FIG. 2 to FIG. 4, the first network element may be an AF network element, an OAM network element, or another network element. The second network element may be a network element that manages a BC. For details, refer to the related descriptions of FIG. 2 to FIG. 4. Details are not described herein again.

It may be understood that address information or an identifier of the second network element may be configured or preconfigured. For example, when the first network element accesses a 3GPP network, a network element in the 3GPP network may configure the address information or the identifier of the second network element for the first network element, so that the first network element may establish a communication connection to the second network element by using the address information or the identifier of the second network element, that is, the first network element may interact with the second network element, and send the request information to the second network element. For another example, the first network element may obtain the address information or the identifier of the second network element from another network element (for example, an NEF network element or an NRF network element), so that the first network element may interact with the second network element based on the address information or the identifier.

In a possible implementation, the address information of the second network element may be an internet protocol (internet protocol, IP) address, and the identifier of the second network element may include a fully qualified domain name (fully qualified domain name, FQDN) and/or a uniform resource identifier (uniform resource identifier, URI). It may be understood that the address information of the second network element may alternatively be another address information, and the identifier of the second network element may alternatively be another identifier. This is not specifically limited in embodiments of this application.

It should be understood that according to the related descriptions of the first network element in FIG. 3, considering that in Case 1 and Case 3, the first network element cannot communicate with a node in the BC, that is, the BC and the node in the BC are transparent to the first network element, the first network element may send the request information to the second network element, to request the second network element to enable, through interaction for the first SC between the second network element and the node in the BC, the first node in the BC to perform the first operation on the first SC, to implement management and control over the first SC.

It should be further understood that for Case 2, the first network element may also enable, through interaction between the second network element and the node in the BC, the first node in the BC to perform the first operation on the first SC, to implement management and control over the first SC. This is not limited in embodiments of this application.

It may be understood that the first network element may send the request information based on a service requirement. For example, the first network element may be an AF, and the first network element may generate a new SC based on the service requirement, and deploy the new SC. For another example, the first network element may be OAM, and the first network element may change a status of a deployed SC based on the service requirement, for example, through freezing, unfreezing, or deregistration, to manage the SC deployed in the 3GPP network, to implement optimization of a 3GPP network service.

The following separately describes the first operation and the first SC in step S601.

### 1. First operation

It should be understood that in this embodiment of this application, the first operation may be used to perform life cycle management on the first SC, for example, deploy the SC, change a running status of the SC on the BC, and deregister the SC.

In a possible implementation, the first operation includes an operation of deploying or deregistering the first SC and/or an operation used to change a status of the first SC in the first BC. It may be understood that as described in the foregoing "blockchain", the SC is a segment of executable code, so that the first operation may be performed via the node in the first BC.

Further, the operation of deploying the first SC may be deploying the first SC on a specific chain, that is, deploying the first SC on the first BC, so that the node in the first BC can perform a function corresponding to the first SC. The operation of deregistering the first SC may be offloading the first SC from the first BC, so that the node in the BC cannot initiate any operation to the first SC again. The operation used to change the status of the first SC in the first BC may be changing an invoking status of the first SC in the first BC, for example, whether the node in the first BC can invoke the first SC to execute a corresponding transaction.

For example, the operation of deploying the first SC may be that the second network element may deliver source code of the first SC to at least one node in the first BC, and indicate the at least one node to perform compilation; or the second network element may send compiled source code of the first SC (that is, bytecode of the first SC) to at least one node in the first BC, and indicate the at least one node to install the first SC.

It should be understood that a difference between the operation of deploying the first SC and the foregoing "SC deployment solution on an internet (internet)" lies in that the operation of deploying the first SC may be installation of the first SC by the node in the first BC, which is not a voluntary behavior of the node in the BC. In addition, deployment of the first SC by the at least one node in the first BC may be deployment by all nodes in the first BC or a part of nodes in the first BC. This is not specifically limited in embodiments of this application. In other words, the operation of deploying the first SC may be performed by a part of nodes in the first BC, for example, may be performed by a part of nodes that satisfy an execution condition for deploying the first SC. Certainly, the node in the first BC that performs the first operation on the first SC may be determined by the second network element. A specific implementation is described in detail in step S602 below, and details are not described herein again.

In other words, the first operation is performed on the first SC, so that a life cycle of the first SC can be managed and controlled in the first BC in a unified manner, to implement optimization of an operator network service.

In a possible implementation, the operation used to change the status of the first SC in the first BC includes at least one of the following:
a start operation, where the start operation is used to set the status of the first SC in the first BC to an initialized state;
a freeze (frozen) operation, where the freeze operation is used to set the status of the first SC in the first BC to an unavailable state; or
an unfreeze operation, where the unfreeze operation is used to transition the status of the first SC in the first BC from the unavailable state to an available state.

It may be understood that the first SC is a segment of executable code. After the node in the first BC installs the first SC, the first SC is in an invokable state after a parameter corresponding to the first SC is initialized. In this way, the node in the first BC can invoke the first SC. In other words, the start operation may be that the node in the first BC that installs the first SC starts the first SC.

It may be further understood that the freeze operation may be that the first SC is in a non-invokable state in the first BC. The unfreeze operation may be an inverse operation of the freeze operation, that is, reversing the non-invokable state of the first SC to the invokable state.

In other words, through the operation used to change the status of the first SC in the first BC, the invoking status of the first SC in the first BC can be flexibly changed, to control whether the node in the first BC can invoke the first SC to perform the function corresponding to the first SC. Therefore, an execution status of the function corresponding to the first SC may be flexibly changed based on a dynamic change feature of the node in the 3GPP network, to implement optimization of the 3GPP network service.

It may be understood that the first operation may further include performing the foregoing operation at specified time or in a specified time period. For example, after the first SC is successfully deployed, the first network element predicts, based on the service requirement, that the first SC may need to be frozen at a first moment. For example, execution of the first SC conflicts with execution of another SC, or the first SC may be in the non-invokable state at the moment. The first network element may request, by using the request information, to perform the freeze operation on the first SC at the first moment.

It may be understood that in this embodiment of this application, in addition to the foregoing deployment operation, start operation, freeze operation, unfreeze operation, and deregistration operation, an operation corresponding to SC life cycle management and control may further include a registration operation and an update operation. For details, refer to the following related descriptions of the first SC. Details are not described again.

### 2. First SC

It should be understood that the first SC is an SC that the first network element expects to manage, and the first network element may determine the first SC or generate the first SC based on the service requirement. The first SC may be classified as deployed and undeployed based on a deployment status. When the first SC has been deployed, the first operation may be, for example, the operation of deregistering the first SC or the freeze operation, or the first operation includes the freeze operation and the operation of deregistering the first SC. When the first SC is in a frozen state, the first operation may be the unfreeze operation.

It may be understood that in this embodiment of this application, the first SC may be one or more SCs. The request information may be used to request to perform the first operation on each of the plurality of first SCs. Alternatively, a same or different first operation may be performed by each of the plurality of first SCs. In other words, the first network element may request to perform a same first operation on the plurality of first SCs, or may request to perform different first operations on different first SCs. For example, the plurality of first SCs include a first SC #1 and a first SC #2, a first operation #1 is performed on the first SC #1, and a first operation #2 is performed on the first SC #2. The first operation #1 may be a freeze operation, and the first operation #2 may be a deployment operation.

In a possible implementation, the first SC is a successfully registered SC. It may be understood that the successfully registered SC may be an SC whose validity of registration is successfully verified by the second network element. Therefore, the SC deployed in the network is an SC whose validity of verification is successfully verified. This can improve security. Further, the successfully registered SC may also facilitate management of the second network element. The second network element may determine, based on registration information of the successfully registered SC, a BC on which the SC is deployed, a function corresponding to the SC, and the like.

It should be understood that the first network element may register the first SC without using an SC management procedure corresponding to the request information. For example, the first network element may register the first SC by using an SC registration procedure. The registration procedure may include: The first network element sends a request to the second network element to request to register the SC, where the request includes source code of the SC. The second network element verifies validity of the source code of the SC, and sends registration feedback information to the first network element, to notify the first network element whether the SC is successfully registered. Certainly, the first network element may alternatively send a registration request of the SC to another network element, for example, a registration network element. This is not specifically limited in embodiments of this application.

In a possible implementation, the first SC is an unregistered SC, the request information further includes data of the first SC, and the first operation includes registering the first SC. In other words, the first network element may register the first SC by sending the request information to the second network element, so that verification on the validity of the first SC succeeds. Therefore, security is improved, and SC management is facilitated.

Optionally, an update operation may be deregistering the SC before update and then performing an operation of deploying an updated SC. Alternatively, an update operation may be deregistering the SC before update, then performing an operation of deploying an updated SC, and performing a start operation on the updated SC. It may be understood that because the SC in the BC has a characteristic of immutability, updating is equivalent to freezing and deregistering an original SC and then installing a new SC.

The following describes the request information.

In a possible implementation, the request information includes indication information of the first SC and indication information of the first operation. It may be understood that the indication information of the first SC is used by a network element other than the first network element to determine the first SC, and the indication information of the first operation may be used by a network element other than the first network element to determine the first operation.

In other words, the request information may include the indication information of the first SC and the indication information of the first operation, so that the second network element can determine the first SC that the first network element expects to manage and the first operation that the first network element expects to perform.

### For the indication information of the first SC

In a possible implementation, the indication information of the first SC includes identification information of the first SC and/or the function corresponding to the first SC. The identification information of the first SC may include an identifier (identifier, ID) of the first SC. The identifier of the first SC may be an account address (which may also be referred to as a contract address of the first SC), and the account address may be a unique identifier in the BC. Certainly, the identification information of the first SC may include a name of the first SC. The function corresponding to the first SC may be a service ID, and the service ID may uniquely indicate service information (for example, a function and a service type).

In other words, the first SC may be determined by using the account address of the first SC and the service ID.

It may be understood that the first SC may correspond to one or more functions. For example, the first SC may correspond to an NF #1, or the function corresponding to the first SC may include an NF #1 and an NF #2. When the first SC corresponds to a plurality of functions, the first SC may be determined by using a plurality of service IDs.

### For the indication information of the first operation

In a possible implementation, the indication information of the first operation may be an identifier of the first operation. For example, the network may predefine an identifier of an operation for management and/or control of the SC, and the identifier may uniquely represent content of the operation. For example, the deployment operation corresponds to an ID #1, the start operation corresponds to an ID #2, the freeze operation corresponds to an ID #3, the unfreeze operation corresponds to an ID #4, the deregistration operation corresponds to an ID #5, the registration operation corresponds to an ID #6, and the update operation corresponds to an operation #7. It should be understood that the foregoing is merely an example, and the ID may alternatively be in another form, for example, may be represented by using a symbol A, B, or C. This is not specifically limited in embodiments of this application.

It may be understood that in this embodiment of this application, the first operation may include at least one of the foregoing plurality of operations. For example, the first operation includes the deployment operation and the start operation, so that the indication information of the first operation may be an identifier of the deployment operation and an identifier of the start operation.

In a possible implementation, the request information further includes an execution condition corresponding to the first operation and/or identification information of the first BC. In other words, the request information may further include the execution condition corresponding to the first operation, so that the second network element determines a node in the first BC that needs to perform the first operation on the first SC. Further, the identification information of the first BC may be used to assist the second network element in determining the first BC corresponding to the first SC.

For example, for deployment of the first SC, the first network element may expect the first SC to be deployed on a BC node having a trusted execution environment, so that the request information may include the execution condition corresponding to the first operation.

It may be understood that when the first operation needs to be executed by all nodes in the first BC, the request information may not include the execution condition corresponding to the first operation. Alternatively, the execution condition of the first operation is preset, and the request information may not include the execution condition corresponding to the first operation. Alternatively, the execution condition of the first operation is obtained by the second network element from the registration network element, or is obtained by the second network element during a registration process of the first SC, and the request information may not include the execution condition corresponding to the first operation.

In a possible implementation, the execution condition corresponding to the first operation includes at least one of the following of a node in the first BC that is required for performing the first operation: a capability, an operating environment, a quantity, or a BC node type.

It may be understood that an example in which the first operation is the deployment operation is used, and the first SC may be deployed, based on the execution condition, in an environment expected by the first network element for deployment or on a type of device expected by the first network element for deployment. For example, the first network element may expect the first SC to be deployed on a BC node in the first BC that has a trusted execution environment and that is of a non-terminal device type. For another example, the first network element may expect the first SC to be deployed on a node in the first BC that has a high storage capability and a high computing capability, and expect the node to be used as an execution node of the first SC.

In a possible implementation, the capability specifically includes at least one of the following: a computing capability, a storage capability, or a network connection capability. The operating environment specifically includes: being a trusted execution environment or not, and/or a security level of the trusted execution environment. The BC node type specifically includes a device type.

The following specifically describes the capability, the operating environment, and the BC node type.

In a possible implementation, capability information of a BC node specifically includes at least one of the following: a computing capability of the BC node, a storage capability of the BC node, or a network connection capability of the BC node. The computing capability of the BC node may be a computing speed (for example, a CPU frequency), a calculation capability, or the like of the BC node. The storage capability of the BC node may be a memory size, a local memory size, a read/write rate (or referred to as a read/write bandwidth), or the like of the BC node. The network connection capability of the BC node may be a network connection type provided by the BC node, for example, a 3GPP access connection, a Wi-Fi connection, a Bluetooth connection, or a wired connection.

It may be understood that the trusted execution environment (trusted execution environment, TEE) is a concept relative to a non-trusted execution environment (for example, a rich execution environment (rich execution environment, REE)). Installing the first SC in the TEE can reduce a security risk in a running process of the first SC, improving running security of the first SC.

It may be further understood that the device type may include a terminal device, a RAN device, a CN device, or the like. It may be understood that based on the device type of the BC node, the first SC may be installed on a BC node of a device type expected by the first network element for running. For example, the function of the first SC may be an AMF, and the first network element expects to deploy the first SC on a device with weak mobility, for example, the CN device or the RAN device. In this way, by using the execution condition corresponding to the first operation, the second network element can deploy the first SC on a node in the first BC that is expected by the first network element for deployment.

The following uses Table 1 as an example to describe the execution condition corresponding to the first operation when the first operation is the deployment operation.

**Table 1**

| Parameter name | Parameter meaning |
|---|---|
| Service ID | ID information uniquely representing a service: the function AUSF, and the service type |
| BC ID | ID information uniquely identifying the BC |
| SC ID | ID information uniquely identifying the SC |
| Installation node condition | Quantity of nodes installing the first SC, an installation environment, a device type of the node, a network connection type (a 3GPP connection or a non-3GPP connection), and the like |
| Execution node condition | Quantity of nodes executing the first SC, and capability information required for executing the first SC: the computing capability, the storage capability (a disk read/write speed or read/write bandwidth), the network connection capability (bandwidth), and the like |
| Quantity of verification nodes | Quantity of nodes verifying the first SC |
| Contract input parameter list | Service parameter information (for example, an ID, a location, and a public land mobile network of the terminal device) |
| Contract output parameter list | Service parameter information (for example, the ID, the location, and the public land mobile network of the terminal device) |

As shown in Table 1, the service ID may indicate the function corresponding to the first SC, for example, the AMF or the AUSF. The BC ID may indicate the first BC. The SC ID may indicate the first SC. The installation node condition may include the quantity, whether the installation environment is a trusted environment, the device type of the node installing the first SC, the network connection type, and the like. The execution node condition is similar to the installation node condition. The execution node may not require the installation environment. For the verification node, the verification node may not be required to have a special capability, a special operating environment, and the like. The contract input parameter list and the contract output parameter list indicate an input parameter and an output parameter that are required for executing the first SC. The function of the first SC shown in Table 1 is a positioning function.

It should be understood that the public land mobile network (public land mobile network, PLMN) in Table 1 may represent an operator network.

### For the identification information of the first BC

In a possible implementation, the identification information of the first BC may be configured by the second network element, or may be configured by another network element (for example, the registration network element). This is not specifically limited in embodiments of this application.

It may be understood that the identification information of the first BC may be an ID of the first BC, and the ID of the first BC may be used to uniquely determine the first BC.

It should be understood that the identification information of the first BC may be used by the second network element to determine the first BC. The second network element may determine address information or an identifier of the node in the first BC by using the first BC. Then, the second network element may establish a communication connection to the node in the first BC by using the address information or the identifier of the node in the first BC, to deliver the indication information in step S602.

It may be understood that the second network element may determine the first BC by using information about the first SC. This is not specifically limited in embodiments of this application.

### For step S602

In a possible implementation, the first node in the first BC is determined based on the execution condition corresponding to the first operation and the identification information of the first BC. It should be understood that the second network element obtains information about the BC, for example, an ID of the BC, and address information and identification information of a node in the BC, so that the second network element sends the indication information to the first node in the first BC based on the request information, to indicate the first BC node in the first BC to perform the first operation on the first SC.

In a possible implementation, the first node in the first BC is determined based on the execution condition corresponding to the first operation and the identification information of the first BC. It may be understood that in this embodiment of this application, the first node in the first BC may be a node in the BC that is determined by the first network element to perform the first operation on the first SC, for example, may be a node in the first BC that satisfies the execution condition corresponding to the first operation. Certainly, when determining that all nodes in the first BC need to perform the first operation only on the first SC, the second network element may send the indication information to all the nodes in the first BC.

In a possible implementation, the indication information includes the indication information of the first operation. It may be understood that because one SC may be deployed in the first BC, the indication information may not include the indication information of the first SC.

In a possible implementation, the indication information further includes the indication information of the first SC. It may be understood that the first BC may carry a plurality of SCs, and the indication information of the first SC needs to be delivered, to indicate the first SC to the first node in the first BC.

The following describes sending of the indication information by the second network element to the first node in the first BC.

It should be understood that when deployment of a basic NF-SC in the 3GPP network is not completed, the second network element may use a conventional 3GPP network function to interact with the first node in the first BC. When deployment of the basic NF-SC in the 3GPP network has been deployed, the second network element may invoke the NF-SC to interact with the first node in the first BC.

For example, when the device type of the first node is a terminal device, the second network element may obtain, by using a UDM-SC, an AMF (there may be a plurality of AMFs) corresponding to a subscription permanent identifier (subscription permanent identifier, SUPI) of the terminal device, and send the indication information to the first node by using the AMF.

For another example, when the type of the first node is an access network device, the second network element may query, by using OAM, an AMF (there may be a plurality of AMFs) corresponding to the first node, and send the indication information to the first node by using the AMF.

For another example, when the type of the first node is an NF, the second network element may query, by using an NRF-SC, address information or identification information corresponding to the first node, and send the indication information to the first node. The address information corresponding to the first node may be an IP, and the identification information may be an FQDN or a URI.

For another example, when the type of the first node is an INN, the second network element may send the indication information to the first node based on an IP of the INN.

### For step S603

It may be understood that the first node in the first BC may perform the first operation on the first SC in response to the indication information, for example, by sending a transaction. Then, the first node in the first BC may obtain status data of the first SC, that is, execution result information.

In a possible implementation, a procedure of the method shown in FIG. 6 further includes the following step.

S604: The second network element obtains execution result information of performing the first operation on the first SC by the first node in the first BC, where the execution result information includes an execution success, an execution failure, or an execution error type. It may be understood that after delivering the indication information to the first node in the first BC, the second network element needs to obtain a status of execution for the first SC by the first node in the first BC, to feed back an execution result (for example, the execution error type) of performing the first operation on the first SC to the first network element, so that the first network element subsequently manages and controls the first SC.

Further, in a possible implementation, that the second network element obtains the execution result information of performing the first operation on the first SC by the node in the first BC includes the following steps.

S604-1: The first node in the first BC sends the execution result information to the second network element. Correspondingly, the second network element receives the execution result information from the first node in the first BC.

In other words, the first node in the first BC may actively send the execution result information to the second network element, so that the second network element can obtain the execution result information from the first node in the first BC.

It may be understood that each node in the first BC that needs to perform the first operation on the first SC may send execution result information to the second network element, so that the second network element may obtain the execution result information from each node in the first BC that performs the first operation on the first SC.

It should be understood that before step S604-1, the second network element may send a request to the node in the first BC, to request the node in the first BC to feed back the execution result information of the first SC.

In a possible implementation, the method shown in FIG. 6 further includes the following step.

S605: The second network element sends feedback information to the first network element. Correspondingly, the first network element receives the feedback information from the second network element. The feedback information includes the execution result information of performing the first operation on the first SC by the first node in the first BC. The feedback information may further include execution result information from a plurality of nodes in the first BC, where the plurality of nodes are nodes that perform the first operation on the first SC.

In other words, the first network element may receive the feedback information from the second network element, to determine the execution result of performing the first operation on the first SC, so that the first network element manages and controls the first SC, facilitating implementation of 3GPP network optimization.

In this embodiment of this application, the first network element may send the request information to the second network element, to request to perform the first operation on the first SC that the first network element expects to manage, and the second network element manages, based on the request information, the first BC on which the first SC is deployed, so that the node in the first BC performs the first operation on the first SC. In other words, for the first network element, when the first network element is unaware of the node in the first BC or cannot establish a communication connection to the node in the first BC, the first network element may implement management and control over the first SC through interaction between the second network element and the node in the first BC. Therefore, according to the communication method provided in this embodiment of this application, the SC can be managed and controlled in the decentralized 3GPP network, to implement optimization of the network service.

The actions of the first network element in steps S601 to S605 may be performed by the communication apparatus 500 indicated by invoking, by the processor 501 in the communication apparatus 500 shown in FIG. 5, the application program code stored in the memory 503. The actions of the second network element in steps S601 to S605 may be performed by the communication apparatus 500 indicated by invoking, by the processor 501 in the communication apparatus 500 shown in FIG. 5, the application program code stored in the memory 503. The actions of the first node in the first BC in steps S601 to S605 may be performed by the communication apparatus 500 indicated by invoking, by the processor 501 in the communication apparatus 500 shown in FIG. 5, the application program code stored in the memory 503. This is not limited in embodiments of this application.

The following describes another communication method provided in this application. A difference between the communication method and the method shown in FIG. 6 lies in that nodes in a BC may manage a first SC in an autonomous manner. In this way, signaling overheads can be reduced.

An example in which a first BC node in a BC shown in FIG. 7 interacts with another BC node in the BC other than the first BC node is used. FIG. 7 shows another communication method provided in an embodiment of this application. The method includes the following steps.

S701: The first BC node in the blockchain BC sends a transaction request to the another BC node in the BC other than the first BC node, where the transaction request is used to request to perform a first operation on a first SC, and the BC is a BC on which the first SC is to be deployed or has been deployed.

S702: The first BC node and the another BC node perform transaction consensus to obtain a transaction consensus result of the transaction request, where the transaction consensus result includes that the transaction request is approved or the transaction request fails.

S703: The first BC node and the another BC node update a status of the first SC based on the transaction consensus result.

The following separately describes steps S701 to S703.

### For step S701

It may be understood that the first BC node may be the first network element in FIG. 6, and the first network element may be a node in the BC. Therefore, for the first network element, the first network element may manage and control the first SC by using the procedure of the method shown in FIG. 6. Alternatively, the first network element may manage and control the first SC by using a procedure of the method shown in FIG. 7. This is not specifically limited in embodiments of this application.

It should be understood that the first BC node may broadcast the transaction request in step S701, so that the another BC node, for example, a node A, a node B, ..., and a node N, can obtain the transaction request. Specifically, the transaction request may be a transaction request in the BC. For details, refer to the related descriptions of the transaction request in the foregoing "blockchain". Details are not described again.

Further, the first BC node may alternatively send the transaction request to one BC node in the another BC node, and indicate the BC node to broadcast the transaction request. Alternatively, the first BC node may send the transaction request in another manner, so that all nodes in the BC receive the transaction request. This is not specifically limited in embodiments of this application.

It may be understood that for details of the transaction request, the first SC, and the first operation in step S701, refer to step S601.

For example, the first operation includes an operation of deploying or deregistering the first SC and/or an operation used to change a status of the first SC in the BC.

For example, the operation used to change the status of the first SC in the BC includes:
a start operation, where the start operation is used to set the status of the first SC in the BC to an initialized state;
a freeze operation, where the freeze operation is used to set the status of the first SC in the BC to an unavailable state; or
an unfreeze operation, where the unfreeze operation is used to transition the status of the first SC in the BC from the unavailable state to an available state.

For example, the transaction request includes indication information of the first operation.

For example, the transaction request further includes indication information of the first SC, and the indication information of the first SC includes identification information of the first SC and/or a function corresponding to the first SC.

For example, an execution condition corresponding to the first operation includes capability information, environment information, or type information required for performing the first operation.

In a possible implementation, the capability information specifically includes at least one of the following: a computing capability, a storage capability, or a network connection capability.

The environment information specifically includes: being a trusted execution environment or not, and/or a security level of the trusted execution environment.

The type information specifically includes a device type.

For example, the first SC is a successfully registered SC.

It may be understood that if the first SC is an SC that has not been successfully registered, the transaction request may further include data of the first SC, and the first operation includes registering the first SC.

It may be further understood that the first operation may also include an update operation, a registration operation, and the like. Details are not described herein again.

### For step S702

It should be understood that according to the related descriptions in the foregoing "blockchain", transaction consensus may mean that all the nodes in the BC or a member (for example, a verification node) for transaction verification vote on the transaction request. During voting, the another BC node may add a signature to a voting structure, and send the voting structure to the first BC node. Further, a BC node that performs voting may be the another BC node, and the first BC node does not need to perform voting.

It may be understood that when there are enough votes, the transaction consensus may be completed, so that the first BC node may obtain the transaction consensus result of the transaction request, and write the transaction consensus result to the blockchain.

### For step S703

It may be understood that after each node in the BC completes the transaction consensus and writes a transaction consensus result to the blockchain, whether to perform the first operation on the first SC may be determined based on the transaction consensus result. If the transaction consensus result is that the transaction request is approved, each node in the BC completes the transaction request, and updates the status of the first SC, so that an execution result of performing the first operation on the first SC may be declared in the BC network. In this way, the nodes in the BC can complete management over the first SC in a self-consistency manner, and a second network element does not need to implement management and control over the first SC, saving network resources.

In a possible implementation, the method shown in FIG. 7 further includes the following step.

S704: The first BC node sends an updated status of the first SC to the second network element, where the second network element is deployed in an operator network.

It may be understood that the second network element may be the second network element in FIG. 6. The second network element is configured to manage the BC, so that the second network element can obtain a status change of the first SC in the BC. Therefore, the second network element can obtain a status of an SC in the BC in time, facilitating management of the second network element. Alternatively, the second network element may be a registration network element in the operator network. The registration network element is configured to store related information of an SC in the BC, so that another network element, for example, the second network element, obtains the related information of the SC in the BC, facilitating management of the second network element.

It may be further understood that the another BC node in the BC other than the first BC node may also send the updated status of the first SC to the second network element. This is not specifically limited in embodiments of this application.

In this embodiment of this application, the first BC node may initiate the transaction request. Then, whether to perform the first operation on the first SC is determined by using a transaction consensus mechanism of the BC, and a result of performing the first operation on the first SC by each BC node is determined by updating the status of the first SC. In this way, the first SC can be managed and controlled in an autonomous manner by a plurality of nodes in the BC on which the first SC is deployed. Therefore, according to the communication method provided in this embodiment of this application, an SC can be managed and controlled in a decentralized 3GPP network, to implement optimization of a network service.

The actions of the first network element in steps S701 to S704 may be performed by the communication apparatus 500 indicated by invoking, by the processor 501 in the communication apparatus 500 shown in FIG. 5, the application program code stored in the memory 503. The actions of the second network element in steps S701 to S704 may be performed by the communication apparatus 500 indicated by invoking, by the processor 501 in the communication apparatus 500 shown in FIG. 5, the application program code stored in the memory 503. The actions of the first node in the first BC in steps S701 to S704 may be performed by the communication apparatus 500 indicated by invoking, by the processor 501 in the communication apparatus 500 shown in FIG. 5, the application program code stored in the memory 503. This is not limited in embodiments of this application.

It may be understood that in the foregoing embodiments, the method and/or the step implemented by the first network element may alternatively be implemented by a component (for example, a processor, a chip, a chip system, a circuit, a logic module, or software) that can be used in the first network element. The method and/or the step implemented by the second network element may alternatively be implemented by a component (for example, a processor, a chip, a chip system, a circuit, a logic module, or software) that can be used in the second network element. The method and/or the step implemented by the first node in the first BC may alternatively be implemented by a component (for example, a processor, a chip, a chip system, a circuit, a logic module, or software) that can be used in the first node in the first BC. The method and/or the step implemented by the first BC node may alternatively be implemented by a component (for example, a processor, a chip, a chip system, a circuit, a logic module, or software) that can be used in the first node in the first BC.

The foregoing mainly describes the solutions provided in this application. Correspondingly, this application further provides a communication apparatus. The communication apparatus is configured to implement the methods in the method embodiments. The communication apparatus may be the first network element in the method embodiments, an apparatus including the first network element, or a component that can be used in the first network element, for example, a chip or a chip system. Alternatively, the communication apparatus may be the second network element in the method embodiments, an apparatus including the second network element, or a component that can be used to compute the second network element, for example, a chip or a chip system. Alternatively, the communication apparatus may be the node in the BC in the method embodiments, an apparatus including the node in the BC, or a component that can be used to compute the node in the BC, for example, a chip or a chip system.

It may be understood that to implement the foregoing functions, the communication apparatus includes a hardware structure and/or a software module for performing a corresponding function. A person skilled in the art should be easily aware that units and algorithm steps in the examples described with reference to embodiments disclosed in this specification may be implemented in a form of hardware or in a form of a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that module division in embodiments of this application is an example and is merely logical function division. During actual implementation, there may be another division manner.

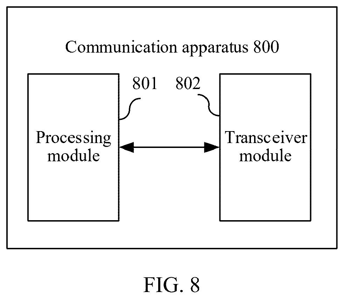

For example, the communication apparatus is the first network element, the second network element, or the node in the BC (for example, the first node in the first BC or the first BC node in the BC) in the method embodiments. FIG. 8 is a diagram of a structure of a communication apparatus according to an embodiment of this application. As shown in FIG. 8, the communication apparatus 800 includes a processing module 801 and a transceiver module 802. The processing module 801 is configured to perform a processing function of the first network element, the second network element, or the node in the BC (for example, the first node in the first BC or the first BC node in the BC) in the method embodiments. The transceiver module 802 is configured to perform a receiving function and a sending function of the first network element, the second network element, or the node in the BC (for example, the first node in the first BC or the first BC node in the BC) in the method embodiments.

All related content of each step in the method embodiments may be cited in function descriptions of a corresponding functional module. Details are not described herein again.

The communication apparatus 800 provided in this embodiment can perform the foregoing measurement methods. Therefore, for technical effects that can be achieved by the communication apparatus 800, refer to the method embodiments. Details are not described herein again.

In a possible design solution, in this embodiment of this application, the transceiver module 802 may include a receiving module and a sending module (not shown in FIG. 8). The transceiver module is configured to implement a sending function and a receiving function of the communication apparatus 800.

In a possible design solution, the communication apparatus 800 may further include a storage module (not shown in FIG. 8), and the storage module stores a program or instructions. When the processing module 801 executes the program or the instructions, the communication apparatus 800 is enabled to perform a function of the first network element, the second network element, or the node in the BC (for example, the first node in the first BC or the first BC node in the BC) in the method shown in FIG. 6 or FIG. 7.

It should be understood that the processing module 801 in the communication apparatus 800 may be implemented by a processor or a processor-related circuit component, or may be a processor or a processing unit. The transceiver module 802 may be implemented by a transceiver or a transceiver-related circuit component, or may be a transceiver or a transceiver unit.

In a possible implementation, an embodiment of this application further provides a computer-readable storage medium. The computer-readable storage medium stores a computer program or instructions. When the computer program or the instructions are executed by a computer, functions in the method embodiments are implemented.

In a possible implementation, an embodiment of this application further provides a computer program product. When the computer program product is executed by a computer, functions in the method embodiments are implemented.

In a possible implementation, an embodiment of this application further provides a communication system. The communication system includes the first apparatus in the method embodiments and the second apparatus in the method embodiments.

In a possible implementation, an embodiment of this application further provides a communication method. The communication method includes the method in any one of the method embodiments or any one of the implementations of the method embodiments.

All or some of the foregoing embodiments may be implemented by software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the method described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
sending, by a first network element, request information to a second network element deployed in an operator network, wherein the request information is used to request to perform a first operation on a first smart contract SC that the first network element expects to manage;
sending, by the second network element, indication information to a first node in a first blockchain BC based on the request information, wherein the indication information indicates to perform the first operation on the first SC, and the first BC is a BC on which the first SC is to be deployed or has been deployed; and
performing, by the first node in the first BC, the first operation on the first SC in response to the indication information.

2. The method according to claim 1, wherein the first operation comprises an operation of deploying or deregistering the first SC and/or an operation used to change a status of the first SC in the first BC.

3. The method according to claim 2, wherein the operation used to change the status of the first SC in the first BC comprises at least one of the following:
a start operation, wherein the start operation is used to set the status of the first SC in the first BC to an initialized state;
a freeze operation, wherein the freeze operation is used to set the status of the first SC in the first BC to an unavailable state; or
an unfreeze operation, wherein the unfreeze operation is used to transition the status of the first SC in the first BC from the unavailable state to an available state.

4. The method according to any one of claims 1 to 3, wherein the request information comprises indication information of the first SC and indication information of the first operation.

5. The method according to any one of claims 1 to 4, wherein the indication information comprises the indication information of the first operation.

6. The method according to claim 5, wherein the indication information further comprises the indication information of the first SC.

7. The method according to any one of claims 4 to 6, wherein the indication information of the first SC comprises identification information of the first SC and/or a function corresponding to the first SC.

8. The method according to any one of claims 1 to 7, wherein the request information further comprises an execution condition corresponding to the first operation and/or identification information of the first BC.

9. The method according to any one of claims 1 to 8, wherein the first node in the first BC is determined based on the execution condition corresponding to the first operation and the identification information of the first BC.

10. The method according to claim 8 or 9, wherein the execution condition corresponding to the first operation comprises at least one of the following of a node in the first BC that is required for performing the first operation: a capability, an operating environment, a quantity, or a BC node type.

11. The method according to claim 10, wherein the capability specifically comprises at least one of the following: a computing capability, a storage capability, or a network connection capability;
the operating environment specifically comprises: being a trusted execution environment or not, and/or a security level of the trusted execution environment; and
the BC node type specifically comprises a device type.

12. The method according to any one of claims 1 to 11, wherein the first SC is a successfully registered SC.

13. The method according to any one of claims 1 to 11, wherein the first SC is an unregistered SC, the request information further comprises data of the first SC, and the first operation comprises registering the first SC.

14. The method according to any one of claims 1 to 13, wherein the method further comprises:
obtaining, by the second network element, execution result information of performing the first operation on the first SC by the first node in the first BC, wherein the execution result information comprises an execution success, an execution failure, or an execution error type.

15. The method according to claim 14, wherein obtaining, by the second network element, the execution result information of performing the first operation on the first SC by the first node in the first BC comprises:
sending, by the first node in the first BC, the execution result information to the second network element; and
receiving, by the second network element, the execution result information from the first node in the first BC.

16. The method according to claim 14 or 15, wherein the method further comprises:
sending, by the second network element, feedback information to the first network element, wherein the feedback information comprises the execution result information of performing the first operation on the first SC by the first node in the first BC; and
receiving, by the first network element, the feedback information from the second network element.

17. A communication method, wherein the method comprises:
generating, by a first network element, request information, wherein the request information is used to request to perform a first operation on a first smart contract SC that the first network element expects to manage; and
sending, by the first network element, the request information to a second network element, wherein the second network element is deployed in an operator network, the second network element is configured to manage at least one BC, and the at least one BC comprises a first BC on which the first SC is to be deployed or has been deployed.

18. The method according to claim 17, wherein the method further comprises:
receiving, by the first network element, feedback information from the second network element, wherein the feedback information comprises execution result information of performing the first operation on the first SC by a first node in the first BC, and the execution result information comprises an execution success, an execution failure, or an execution error type.

19. A communication method, wherein the method comprises:
receiving, by a second network element, request information from a first network element, wherein the request information is used to request to perform a first operation on a first smart contract SC that the first network element expects to manage, and the second network element is deployed in an operator network; and
sending, by the second network element, indication information to a first node in a first blockchain BC based on the request information, wherein the indication information indicates to perform the first operation on the first SC, and the first BC is a BC on which the first SC is to be deployed or has been deployed.

20. The method according to claim 19, wherein the method further comprises:
obtaining, by the second network element, execution result information of performing the first operation on the first SC by the first node in the first BC, wherein the execution result information comprises an execution success, an execution failure, or an execution error type.

21. The method according to claim 20, wherein obtaining, by the second network element, the execution result information of performing the first operation on the first SC by the node in the first BC comprises:
receiving, by the second network element, the execution result information from the first node in the first BC.

22. The method according to claim 20 or 21, wherein the method further comprises:
sending, by the second network element, feedback information to the first network element, wherein the feedback information comprises the execution result information of performing the first operation on the first SC by the first node in the first BC.

23. The method according to any one of claims 17 to 22, wherein the request information comprises indication information of the first SC and indication information of the first operation.

24. The method according to any one of claims 17 to 23, wherein the request information further comprises an execution condition corresponding to the first operation and/or identification information of the first BC, and the first BC is the BC on which the first SC is to be deployed or has been deployed.

25. The method according to any one of claims 17 to 24, wherein the first SC is an unregistered SC, the request information further comprises data of the first SC, and the first operation comprises registering the first SC.

26. A communication method, wherein the method comprises:
receiving, by a first node in a first blockchain BC, indication information from a second network element, wherein the indication information indicates to perform a first operation on a first smart contract SC, the first BC is a BC on which the first SC is to be deployed or has been deployed, and the second network element is deployed in an operator network; and
performing, by the first node in the first BC, the first operation on the first SC in response to the indication information.

27. The method according to claim 26, wherein the method further comprises:
sending, by the first node in the first BC, the execution result information to the second network element, wherein the execution result information comprises an execution success, an execution failure, or an execution error type.

28. The method according to any one of claims 19 to 27, wherein the indication information comprises the indication information of the first operation.

29. The method according to any one of claims 19 to 28, wherein the indication information further comprises the indication information of the first SC.

30. The method according to any one of claims 17 to 29, wherein the first operation comprises an operation of deploying or deregistering the first SC and/or an operation used to change a status of the first SC in the first BC.

31. The method according to claim 30, wherein the operation used to change the status of the first SC in the first BC comprises:
a start operation, wherein the start operation is used to set the status of the first SC in the first BC to an initialized state;
a freeze operation, wherein the freeze operation is used to set the status of the first SC in the first BC to an unavailable state; or
an unfreeze operation, wherein the unfreeze operation is used to transition the status of the first SC in the first BC from the unavailable state to an available state.

32. The method according to any one of claims 17 to 31, wherein the indication information of the first SC comprises identification information of the first SC and/or a function corresponding to the first SC.

33. The method according to any one of claims 18 to 32, wherein the first node in the first BC is determined based on the execution condition corresponding to the first operation and the identification information of the first BC.

34. The method according to any one of claims 17 to 33, wherein the execution condition corresponding to the first operation comprises at least one of the following of a node in the first BC that is required for performing the first operation: a capability, an operating environment, a quantity, or a BC node type.

35. The method according to claim 34, wherein the capability specifically comprises at least one of the following: a computing capability, a storage capability, or a network connection capability;
the operating environment specifically comprises: being a trusted execution environment or not, and/or a security level of the trusted execution environment; and
the BC node type specifically comprises a device type.

36. The method according to any one of claims 17 to 35, wherein the first SC is a successfully registered SC.

37. A communication method, wherein the method comprises:
sending, by a first BC node in a blockchain BC, a transaction request to another BC node in the BC other than the first BC node, wherein the transaction request is used to request to perform a first operation on a first SC, and the BC is a BC on which the first SC is to be deployed or has been deployed;
performing, by the first BC node and the another BC node, transaction consensus to obtain a transaction consensus result of the transaction request, wherein the transaction consensus result comprises that the transaction request is approved or the transaction request fails; and
updating, by the first BC node and the another BC node, a status of the first SC based on the transaction consensus result.

38. The method according to claim 37, wherein the first operation comprises an operation of deploying or deregistering the first SC and/or an operation used to change the status of the first SC in the BC.

39. The method according to claim 38, wherein the operation used to change the status of the first SC in the BC comprises:
a start operation, wherein the start operation is used to set the status of the first SC in the BC to an initialized state;
a freeze operation, wherein the freeze operation is used to set the status of the first SC in the BC to an unavailable state; or
an unfreeze operation, wherein the unfreeze operation is used to transition the status of the first SC in the BC from the unavailable state to an available state.

40. The method according to any one of claims 37 to 39, wherein the transaction request comprises indication information of the first operation.

41. The method according to claim 40, wherein the transaction request further comprises indication information of the first SC, and the indication information of the first SC comprises identification information of the first SC and/or a function corresponding to the first SC.

42. The method according to claim 41, wherein an execution condition corresponding to the first operation comprises capability information, environment information, or type information required for performing the first operation.

43. The method according to claim 42, wherein the capability information specifically comprises at least one of the following: a computing capability, a storage capability, or a network connection capability;
the environment information specifically comprises: being a trusted execution environment or not, and/or a security level of the trusted execution environment; and
the type information specifically comprises a device type.

44. The method according to any one of claims 37 to 43, wherein the first SC is a successfully registered SC.

45. The method according to any one of claims 37 to 44, wherein the method further comprises:
sending, by the first BC node, an updated status of the first SC to a second network element, wherein the second network element is deployed in an operator network.

46. A communication apparatus, wherein the communication apparatus comprises a module or a unit configured to perform the method according to any one of claims 17, 18, 23 to 25, and 30 to 36, a module or a unit configured to perform the method according to any one of claims 19 to 25 and 28 to 36, a module or a unit configured to perform the method according to any one of claims 26 to 36, or a module or a unit configured to perform the method according to any one of claims 37 to 45.

47. A communication apparatus, wherein the communication apparatus comprises a processor; and the processor is configured to: by using a logic circuit and/or executing instructions, enable the communication apparatus to perform the method according to any one of claims 17, 18, 23 to 25, and 30 to 36, or enable the communication apparatus to perform the method according to any one of claims 19 to 25 and 28 to 36, is configured to perform the method according to any one of claims 26 to 36, or is configured to perform the method according to any one of claims 37 to 45.

48. The communication apparatus according to claim 47, wherein the communication apparatus further comprises a memory, and the memory is configured to store the instructions.

49. The communication apparatus according to claim 47 or 48, wherein the communication apparatus further comprises a memory, and the memory is configured to store the instructions.

50. The communication apparatus according to claim 46 or 47, wherein the communication apparatus further comprises a communication interface, and the communication interface is configured to input and/or output signaling and/or data.

51. A computer-readable storage medium, wherein the computer-readable storage medium comprises instructions; and when the instructions are run by a processor, the method according to any one of claims 17, 18, 23 to 25, and 30 to 36, the method according to any one of claims 19 to 25 and 28 to 36, or the method according to any one of claims 37 to 45 is implemented.

52. A computer program product, wherein the computer program product comprises a computer program or instructions; and when the computer program or the instructions are run on a computer, the computer is enabled to perform the method according to any one of claims 17, 18, 23 to 25, and 30 to 36, the computer is enabled to perform the method according to any one of claims 19 to 25 and 28 to 36, or the computer is enabled to perform the method according to any one of claims 37 to 45.
